# EUROPEAN PATENT APPLICATION

(11) **EP 4 484 811 A1**
(43) Date of publication of application: **01.01.2025**
(21) Application number: 23839662.6
(22) Date of filing: 12.07.2023
(51) Int. Cl.: F16K 27/00

(54) **COOLING MODULE VALVE AND COOLING MODULE**

(30) Priority: 13.07.2022 JP 2022112716
(71) Applicant: AISIN CORPORATION, Kariya-shi, Aichi 448-8650 (JP)
(72) Inventor: ISHII, Masato, Kariya-shi, Aichi 448-8650 (JP); YANO, Hideto, Kariya-shi, Aichi 448-8650 (JP); ESAKI, Yasuhiko, Kariya-shi, Aichi 448-8650 (JP)
(74) Representative: Kramer Barske Schmidtchen Patentanwälte PartG mbB
(86) International application number: PCT/JP2023/025773
(87) International publication number: WO 2024/014490

(57) **Abstract**

A cooling module valve that switches between a plurality of channels including an inflow channel and outflow channel of fluid flowing in a cooling module includes a valve chamber into which the fluid flowing through the inflow channel flows and from which the fluid flowing through the outflow channel flows out, a valve body that is housed in the valve chamber and switches between the plurality of channels, and at least either at least one inflow spare chamber disposed between the valve chamber and the inflow channel and adjacent to the valve chamber, or at least one outflow spare chamber disposed between the valve chamber and the outflow channel and adjacent to the valve chamber.

## Description

### TECHNICAL FIELD

The present invention relates to a cooling module valve and a cooling module.

### BACKGROUND ART

In recent years, an automobile (hybrid electric vehicle (HEV), plug-in hybrid electric vehicle (PHEV), battery electric vehicle (BEV), fuel-cell electric vehicle (FCEV), and the like) including a motor as a traveling drive source has been widely used. These automobiles (hereinafter, collectively referred to as an "electric vehicle") include a battery for driving motors. In the electric vehicle, there are many devices that require cooling, such as the motors (including an internal combustion engine such as an engine), the battery, an air conditioner, and an ECU. Therefore, a cooling circuit that circulates cooling water is included to cool these devices. However, these devices may have different appropriate operating temperatures. In such a case, because temperature of the cooling water to be circulated is changed for each device having different operating temperatures, it is necessary to include an independent cooling circuit for each temperature of the cooling water, requiring complicated routing of cooling circuit pipes and circuit configuration. A valve that switches between channels is also required to correspond to such a complicated circuit configuration.

In a cooling module (channel switching device in Patent Literature 1) disclosed in Patent Literature 1, a valve (heat medium three-way valve in Patent Literature 1) is disclosed in which an inflow channel (heat medium inlet in Patent Literature 1) into which cooling water (heat medium in Patent Literature 1) flows and an outflow channel (heat medium outlet in Patent Literature 1) from which the cooling water flows out are formed at different height positions.

### CITATIONS LIST

### PATENT LITERATURE

Patent Literature 1: WO 2022/019058 A

### SUMMARY OF INVENTION

### TECHNICAL PROBLEMS

In the valve of the cooling module disclosed in Patent Literature 1, the cooling water flowing in the valve is moved in a vertical direction to flow out. Then, the inflow channel and the outflow channel are formed in a direction intersecting a housing of the valve. For the valve disclosed in Patent Literature 1, because it is necessary to dispose the inflow channel and the outflow channel according to a height of the valve, the disposition of the inflow channel and the outflow channel is restricted by the valve, and as a result, routing of the inflow channel and the outflow channel may be complicated.

The present invention has been made in view of the above problems, and provides a cooling module valve and a cooling module that allow disposition of inflow channels and outflow channels without restriction by height of a valve, and are highly flexible in routing the inflow channel and the outflow channel.

### SOLUTIONS TO PROBLEMS

One embodiment of a cooling module valve according to the present invention switches between a plurality of channels including an inflow channel and outflow channel of fluid flowing in a cooling module, the cooling module valve including a valve chamber into which the fluid flowing through the inflow channel flows and from which the fluid flowing through the outflow channel flows out, a valve body that is housed in the valve chamber and switches between the plurality of channels, and at least either at least one inflow spare chamber disposed between the valve chamber and the inflow channel and adjacent to the valve chamber, or at least one outflow spare chamber disposed between the valve chamber and the outflow channel and adjacent to the valve chamber.

According to the present embodiment, because at least either the inflow spare chamber disposed between the valve chamber and the inflow channel, and the outflow spare chamber disposed between the valve chamber and the outflow channel is provided, the fluid flows into the valve chamber via the inflow spare chamber and flows out from the valve chamber via the outflow spare chamber. Therefore, by appropriately designing sizes (heights) of the inflow spare chamber and the outflow spare chamber, disposition of the inflow channel and the outflow channel is not restricted by height of the cooling module valve. Thus, it is possible to provide a cooling module valve highly flexible in routing the inflow channel and the outflow channel.

One embodiment of the cooling module according to the present invention includes a manifold formed by joining a plurality of resin housings, a cooling module valve that is housed in the manifold and switches between a plurality of channels, and a water pump that pumps fluid that flows through the channels, in which the cooling module valve includes a valve body, a valve chamber housing the valve body, and a spare chamber disposed between the valve chamber and the channels and adjacent to the valve chamber, of a plurality of the channels, the valve chamber, the spare chamber, and the water pump, at least a vortex chamber is formed in the resin housing, and the resin housing includes solely the channels, the valve chamber, the spare chamber, the vortex chamber, and a partition wall partitioning the channels, the valve chamber, the spare chamber, and the vortex chamber.

According to the present embodiment, the manifold can be downsized.

One embodiment of the cooling module according to the present invention includes a manifold formed by joining a plurality of resin housings, and a cooling module valve that is housed in the manifold and switches between a plurality of channels, in which the cooling module valve includes a valve chamber, and a spare chamber disposed between the valve chamber and the channels and adjacent to the valve chamber, a plurality of the channels, the valve chamber, and the spare chamber are formed in the resin housing, the valve chamber includes a first valve chamber and a second valve chamber, and the resin housing includes a valve communication path that allows the first valve chamber and the second valve chamber to communicate with each other.

According to the present embodiment, it is possible to allow the fluid to communicate between the first valve chamber and the second valve chamber.

One embodiment of the cooling module according to the present invention includes a manifold formed by joining a plurality of resin housings at a joining surface, and a cooling module valve that is housed in the manifold and switches between a plurality of channels, in which the cooling module valve includes a valve body that rotates about a rotation axis, and a valve chamber housing the valve body,
a plurality of the channels and the valve chamber are formed in the resin housings, at least some of a plurality of the channels have a portion protruding outward from the resin housings, and a plurality of the channels having a portion protruding outward from the resin housings includes a first channel group that is a set of some of the channels, and a second channel group that is a set of a plurality of the channels not included in the first channel group and is disposed so as to be offset with respect to the first channel group in a direction along the rotation axis.

According to the present embodiment, the plurality of channels having different height positions are disposed, and thus the cooling module can be configured to be compact.

### BRIEF DESCRIPTION OF DRAWINGS

FIG. 1 is a circuit configuration diagram of a cooling system including a cooling module according to a first embodiment.
FIG. 2 is a perspective view of the cooling module.
FIG. 3 is an exploded perspective view of the cooling module.
FIG. 4 is a perspective view of a first housing as viewed from a joining surface side.
FIG. 5 is an exploded perspective view of the cooling module.
FIG. 6 is a perspective view of a first valve body of a first rotary valve.
FIG. 7 is a perspective view of a second valve body of a second rotary valve.
FIG. 8 is a cross-sectional view taken along the line VIII-VIII in FIG. 3.
FIG. 9 is a perspective view of a lower housing as viewed from the joining surface side.
FIG. 10 is a cross-sectional view taken along the line X-X in FIG. 2.
FIG. 11 is a diagram showing operation of the cooling system.
FIG. 12 is a perspective view of a valve body of a rotary valve in a cooling module according to a second embodiment.
FIG. 13 is a partially enlarged cross-sectional view of the cooling module.
FIG. 14 is a cross-sectional view showing a flow of cooling water when the valve body is in a first position.
FIG. 15 is a cross-sectional view showing a flow of the cooling water when the valve body is in a second position.
FIG. 16 is a cross-sectional view showing a flow of the cooling water when the valve body is in a third position.
FIG. 17 is a perspective view of a cooling module according to a third embodiment.
FIG. 18 is an exploded perspective view of the cooling module.
FIG. 19 is a cross-sectional view taken along the line XIX-XIX in FIG. 17.
FIG. 20 is an exploded perspective view of a manifold.
FIG. 21 is a perspective view of a cooling module according to a fourth embodiment.
FIG. 22 is a cross-sectional view taken along the line XXII-XXII in FIG. 21.

### DESCRIPTION OF EMBODIMENTS

Hereinafter, one embodiment of a cooling module valve according to the present invention will be described in detail with reference to the drawings. Note that embodiments described below are examples for describing the present invention, and the present invention is not limited only to these embodiments. Therefore, the present invention can be implemented in various forms without departing from the gist thereof.

### [First embodiment]

### [Configuration of cooling system]

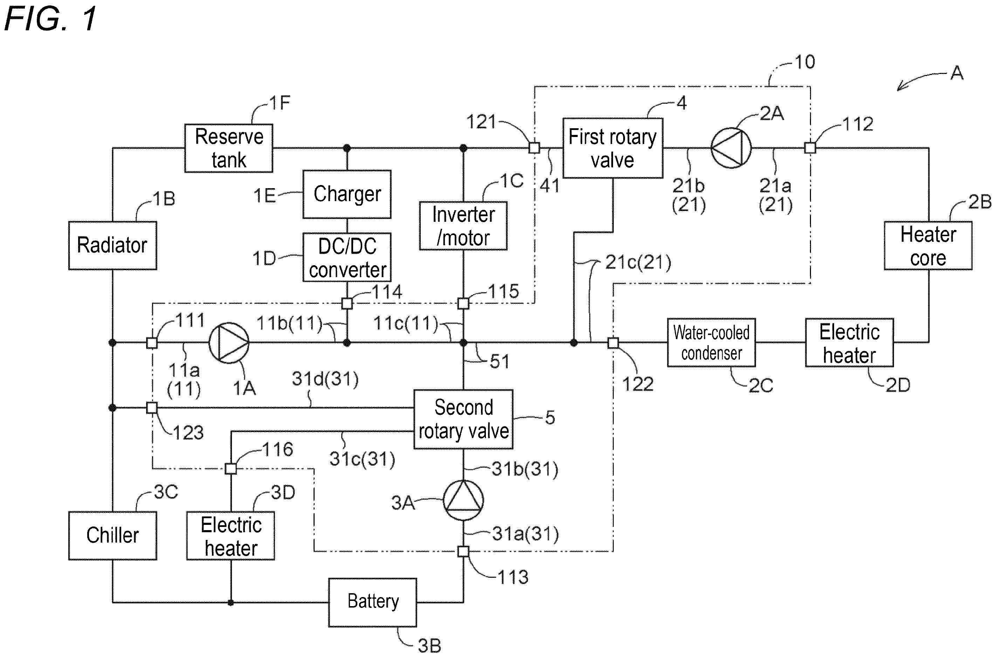

As shown in FIG. 1, a cooling system A including a cooling module valve according to a first embodiment includes a first water pump 1A, a radiator 1B, an inverter/motor 1C, a DC-DC converter 1D, a charger 1E, a reserve tank 1F, a second water pump 2A, a heater core 2B, an electric heater 2D, a water-cooled condenser 2C, a third water pump 3A, a battery 3B, a chiller 3C, an electric heater 3D, a first rotary valve 4 (an example of the cooling module valve), a second rotary valve 5 (an example of the cooling module valve), and a plurality of channels for circulating cooling water (an example of fluid, coolant) therethrough. Among them, the first water pump 1A, the second water pump 2A, the third water pump 3A, the first rotary valve 4, and the second rotary valve 5 are mounted on the cooling module 10. Meanwhile, the radiator 1B, the inverter/motor 1C, the DC-DC converter 1D, the charger 1E, the reserve tank 1F, the heater core 2B, the electric heater 2D, the water-cooled condenser 2C, the battery 3B, the chiller 3C, and the electric heater 3D are disposed spaced apart from the cooling module 10, and are configured such that the cooling water flows therethrough and through the cooling module 10, via a plurality of channels.

The cooling system A is used in an automobile including a motor as a traveling drive source (hereinafter, collectively referred to as an "electric vehicle"), such as, for example, a hybrid electric vehicle (HEV), plug-in hybrid electric vehicle (PHEV), battery electric vehicle (BEV), fuel-cell electric vehicle (FCEV), and circulates the cooling water to cool the inverter/motor 1C, the battery 3B, and the like.

The radiator 1B cools high-temperature cooling water. The inverter/motor 1C is a traveling drive source that operates with electric power supplied from the battery 3B. The DC-DC converter 1D and the charger 1E charge the battery 3B. The heater core 2B heats air with the high-temperature cooling water to heat a vehicle interior. The electric heaters 2D and 3D heat the cooling water when temperature of the cooling water is low. The water-cooled condenser 2C and the chiller 3C are cooled when the temperature of the cooling water is high. The battery 3B supplies power to the inverter/motor 1C.

The first water pump 1A pumps the cooling water to be supplied to the inverter/motor 1C, the DC-DC converter 1D, and the charger 1E. The second water pump 2A pumps the cooling water to be supplied to the heater core 2B, the electric heater 2D, and the water-cooled condenser 2C. The third water pump 3A pumps the cooling water to be supplied to the battery 3B, the chiller 3C, and the electric heater 3D. The first water pump 1A, the second water pump 2A, and the third water pump 3A control flow of the cooling water flowing through the plurality of channels by pumping the cooling water.

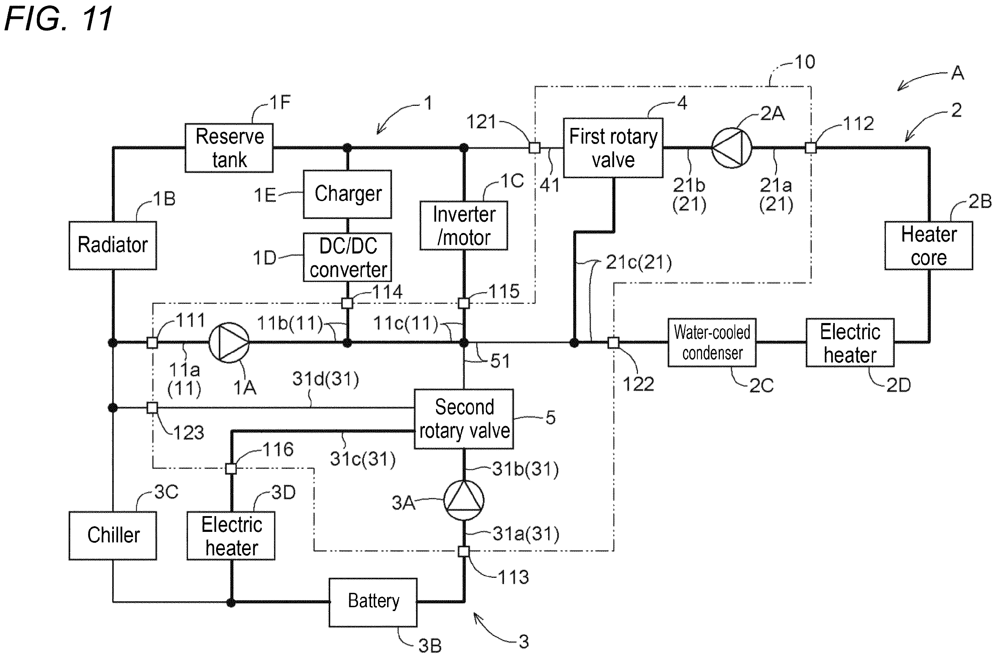

Hereinafter, a circulating channel configured to pass from the radiator 1B through the first water pump 1A, the inverter/motor 1C, the DC-DC converter 1D, the charger 1E, and the reserve tank 1F and return to the radiator 1B is referred to as a first circulation path 1 (refer to FIG. 11), and, of the first circulation path 1, a channel formed in the cooling module 10 is referred to as a first channel 11. Similarly, a circulating channel configured to pass from the heater core 2B through the second water pump 2A, the water-cooled condenser 2C, and the electric heater 2D and return to the heater core 2B is referred to as a second circulation path 2 (refer to FIG. 11), and, of the second circulation path 2, a channel formed in the cooling module 10 is referred to as a second channel 21. Similarly, a circulating channel configured to pass from the battery 3B through the third water pump 3A, the chiller 3C, and the electric heater 3D and return to the battery 3B is referred to as a third circulation path 3 (refer to FIG. 11), and, of the third circulation path 3, a channel formed in the cooling module 10 is referred to as a third channel 31. Furthermore, a communication channel 51 (an example of a channel and an outflow channel) that allows the first channel 11, the second channel 21 and the third channel 31 to communicate with each other is formed in the cooling module 10. A channel configuration in the cooling module 10 will be described later.

### [Configuration of cooling module]

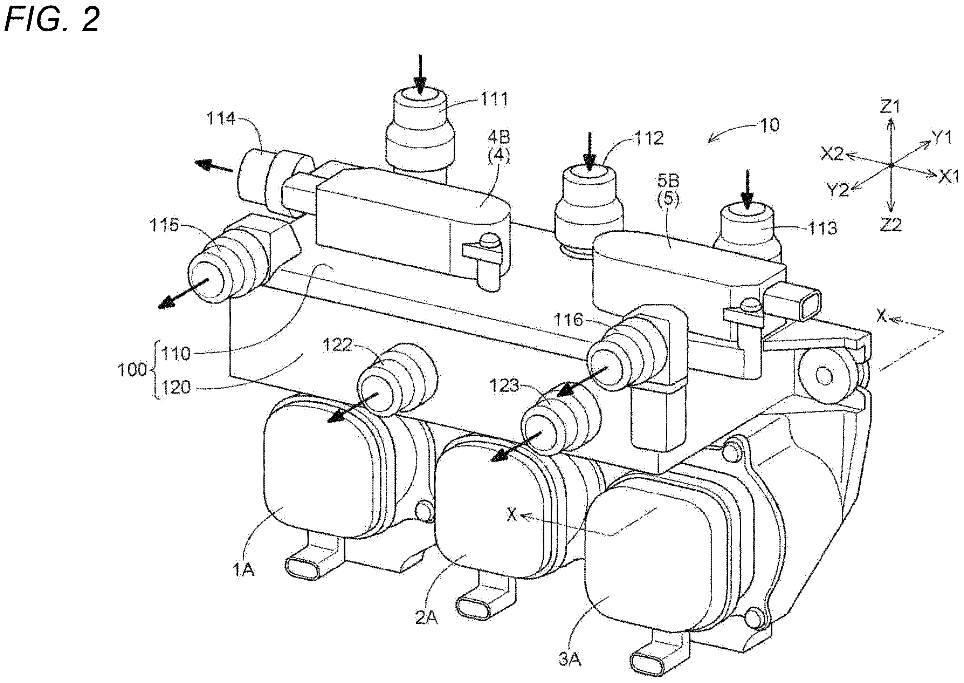

As shown in FIGS. 2 to 5, of the cooling system A, the cooling module 10 includes the first water pump 1A, the second water pump 2A, the third water pump 3A, the first rotary valve 4, the second rotary valve 5, and a manifold 100 in which channels that allow cooling water to flow in these components are formed. The manifold 100 is formed by joining and integrating a plurality of housings, thereby forming a plurality of channels through which cooling water flows across at least two housings (in the present embodiment, a first housing 110 and a second housing 120 to be described later). Note that, as shown in FIG. 1, the cooling module 10 does not have a reserve tank therein. Because the cooling module 10 does not include a reserve tank, it is possible to configure the cooling module 10 to be compact and increase flexibility in disposition of the cooling module 10.

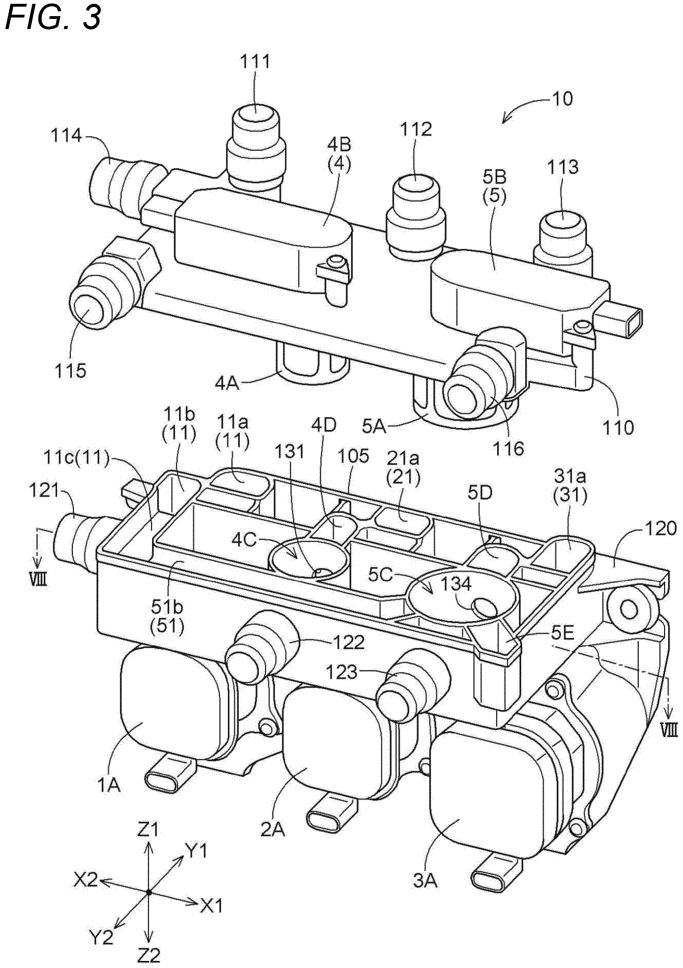

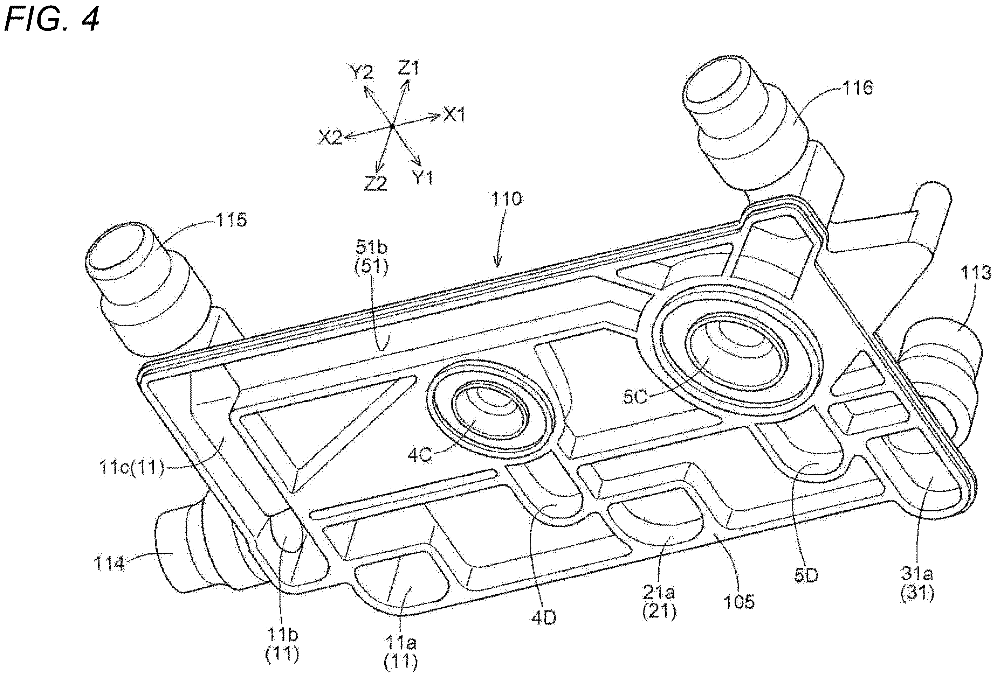

The manifold 100 is formed by joining and integrating the first housing 110 (an example of a resin housing) and the second housing 120 (an example of the resin housing), both made of resin, with a method such as vibration welding. The manifold 100 has a substantially rectangular cuboid shape as a whole, and as shown in FIGS. 3 and 4, a joining surface 105 between the first housing 110 and the second housing 120 has a planar shape. Hereinafter, a direction parallel to a longitudinal direction of the joining surface 105 is defined as an X direction, a direction parallel to a widthwise direction of the joining surface 105 is defined as a Y direction, and a direction perpendicular to the joining surface 105 is defined as a Z direction. That is, the joining surface 105 is parallel to an X-Y plane. Moreover, of the X direction, a direction from the first water pump 1A toward the third water pump 3A is defined as an X1 direction, and an opposite direction thereof is defined as an X2 direction. Of the Y direction, a direction from a second outflow port 115 toward a first inflow port 111 is defined as a Y1 direction, and an opposite direction thereof is defined as a Y2 direction (the second outflow port 115 and the first inflow port 111 will be described later.). Of the Z direction, a direction from the second housing 120 toward the first housing 110 is defined as a Z1 direction, and an opposite direction thereof is defined as a Z2 direction. The Z2 direction is a gravity direction. That is, the first housing 110 is disposed on an upper side of the second housing 120 in a vertical direction.

As shown in FIGS. 2 and 3, the first housing 110 is formed with the first inflow port 111, a second inflow port 112, a third inflow port 113, a first outflow port 114, the second outflow port 115, and a fifth outflow port 116. Furthermore, a third outflow port 121, a fourth outflow port 122, and a sixth outflow port 123 are formed in the second housing 120. All of the first inflow port 111, the second inflow port 112, the third inflow port 113, the first outflow port 114, the second outflow port 115, the third outflow port 121, the fourth outflow port 122, the fifth outflow port 116, and the sixth outflow port 123 have a cylindrical shape. The first inflow port 111, the second inflow port 112, and the third inflow port 113 are arranged side by side so that axes thereof are along the Z direction and on the same plane, and all of the ports have openings open in the Z1 direction. The first outflow port 114 and the third outflow port 121 are arranged side by side so that axes thereof are along the X direction and on the same plane, and both the ports have openings open in the X2 direction. The second outflow port 115 and the fifth outflow port 116 are arranged side by side so that axes thereof are along the Y direction and on the same plane, and both the ports have openings open in the Y2 direction. The fourth outflow port 122 and the sixth outflow port 123 are also arranged side by side such that their axes are along the Y direction and on the same plane, and both the ports have openings in the Y2 direction.

The first inflow port 111, the first outflow port 114, and the second outflow port 115 are included in the first circulation path 1, and all of the ports communicate with the first channel 11. The second inflow port 112 and the fourth outflow port 122 are included in the second circulation path 2, and both the ports communicate with the second channel 21. The third inflow port 113, the fifth outflow port 116, and the sixth outflow port 123 are included in the third circulation path 3, and all of the ports communicate with the third channel 31.

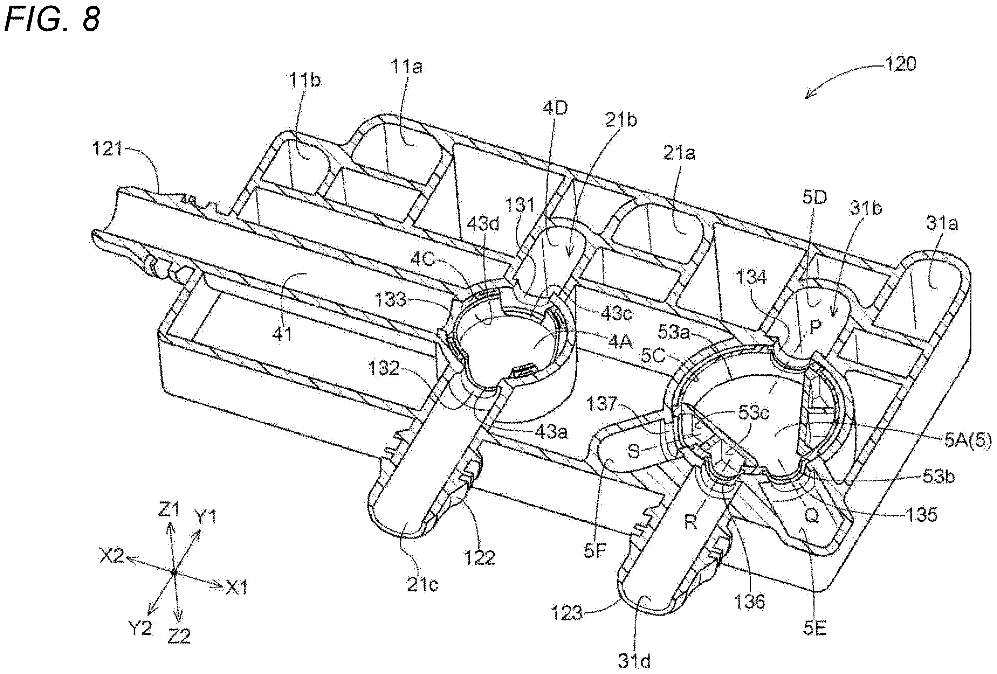

As shown in FIGS. 2 and 3, in the manifold 100, the first rotary valve 4 and the second rotary valve 5 are mounted between the first inflow port 111, the second inflow port 112, and the third inflow port 113, and the second outflow port 115 and the fifth outflow port 116 in the first housing 110 when the first housing 110 is viewed along the Z2 direction. In the first rotary valve 4 and the second rotary valve 5, a first actuator 4B that rotationally drives a first valve body 4A (an example of a valve body) of the first rotary valve 4 and a second actuator 5B that rotationally drives a second valve body 5A (an example of the valve body) of the second rotary valve 5 are exposed on an upper portion of the first housing 110. The first valve body 4A and the second valve body 5A are both positioned in the second housing 120 (refer to FIG. 8). Thus, a flow of the cooling water flowing through the plurality of channels can be controlled by switching between the channels formed in the second housing 120. Both the first rotary valve 4 and the second rotary valve 5 are an electromagnetic valve that can switch between the channels with an actuator, and rotate the first valve body 4A and the second valve body 5A about an axis along the Z direction to switch between the channels, thereby controlling the flow of the cooling water flowing through the plurality of channels. Note that the first valve body 4A is a three-way valve, and the second valve body 5A is a four-way valve.

Details will be described later.

As shown in FIGS. 2 and 3, in the manifold 100, the first water pump 1A, the second water pump 2A, and the third water pump 3A are mounted on the second housing 120 in this order along the X1 direction. At this time, the first water pump 1A, the second water pump 2A, and the third water pump 3A are disposed such that respective rotation axes thereof are along the Y direction. In the second housing 120, there are formed a downward first sub-channel 11a communicating with the first inflow port 111 and extending in the Z direction, a downward second sub-channel 21a communicating with the second inflow port 112 and extending in the Z direction, and a downward third sub-channel 31a communicating with the third inflow port 113 and extending in the Z direction. The downward first sub-channel 11a, the downward second sub-channel 21a, and the downward third sub-channel 31a are formed across the first housing 110 and the second housing 120. The first water pump 1A pumps the cooling water flowing from the first inflow port 111 through the downward first sub-channel 11a. The second water pump 2A pumps the cooling water flowing from the second inflow port 112 through the downward second sub-channel 21a. The third water pump 3A pumps the cooling water flowing from the third inflow port 113 through the downward third sub-channel 31a. Note that the downward first sub-channel 11a is a part of the first channel 11, the downward second sub-channel 21a is a part of the second channel 21, and the downward third sub-channel 31a is a part of the third channel 31.

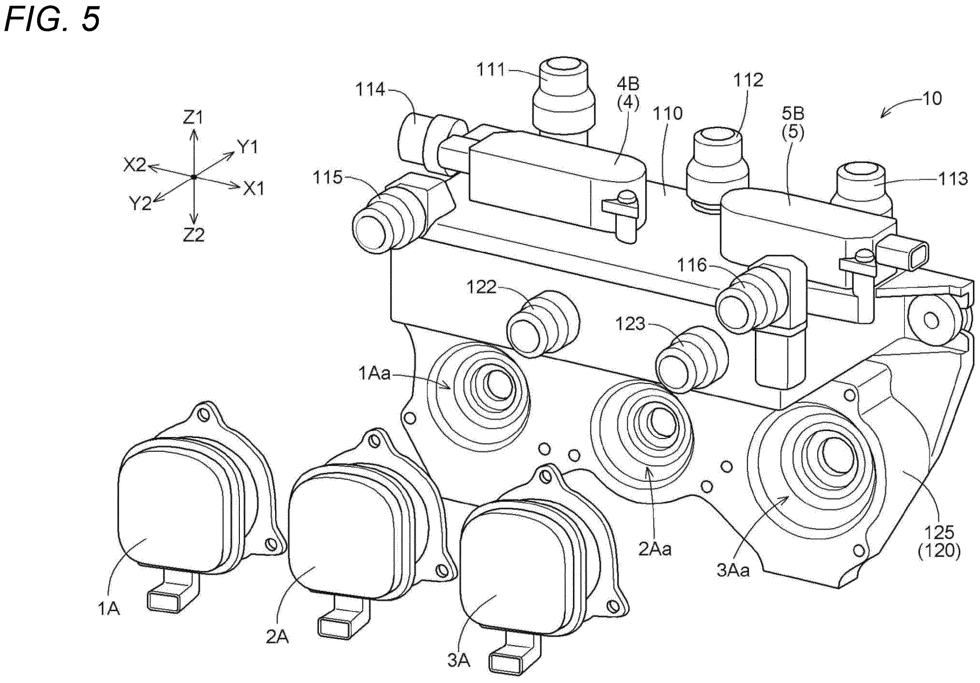

As shown in FIG. 5, the first water pump 1A, the second water pump 2A, and the third water pump 3A are mounted on a mounting portion 125 formed at an end portion (lower end in the vertical direction) of the second housing 120 in the Z2 direction. The mounting portion 125 is thicker than other portions of the second housing 120. Thus, it is possible to ensure strength of even a second housing 120 made of resin to be mounted with and hold the heavy first water pump 1A, the second water pump 2A, and the third water pump 3A.

In the mounting portion 125, there are formed a first vortex chamber 1Aa in which the cooling water flowing from the downward first sub-channel 11a into the first water pump 1A and discharged by rotation of an impeller (not shown) swirls, a second vortex chamber 2Aa in which the cooling water flowing from the downward second sub-channel 21a into the second water pump 2A and discharged by rotation of an impeller swirls, and a third vortex chamber 3Aa in which the cooling water flowing from the downward third sub-channel 31a into the third water pump 3A and discharged by rotation of an impeller swirls Thus, because the first vortex chamber 1Aa, the second vortex chamber 2Aa, and the third vortex chamber 3Aa are formed in the mounting portion 125, shrouds for regulating inflow and outflow directions of the cooling water are not required for the first water pump 1A, the second water pump 2A, and the third water pump 3A, and thus, downsizing, weight reduction, and cost reduction of the cooling module 10 is possible.

Thus, because the cooling module 10 incudes the plurality of channels formed by the manifold 100 extending across the first housing 110 and the second housing 120, the number of pipes can be reduced. Furthermore, because the manifold 100 is configured by joining the first housing 110 and the second housing 120, even if shapes and configuration of the channels in the manifold 100 are complicated due to consideration of positions and directions of the ports to which the pipes are connected, a shape of each of the first housing 110 and the second housing 120 can be simplified. Thus, because the pipes connected to the ports can be integrated to avoid redundant routing, lengths of the pipes connected to the ports can be shortened and simplified.

### [Configuration of rotary valve]

The first rotary valve 4 includes the first valve body 4A, a first valve chamber 4C (an example of a valve chamber), and a first spare chamber 4D (an example of an inflow spare chamber and a spare chamber). The second rotary valve 5 includes the second valve body 5A, a second valve chamber 5C (an example of the valve chamber), a second spare chamber 5D (an example of the inflow spare chamber and the spare chamber), a third spare chamber 5E (an example of an outflow spare chamber and the spare chamber), and a fourth spare chamber 5F (an example of the outflow spare chamber and the spare chamber).

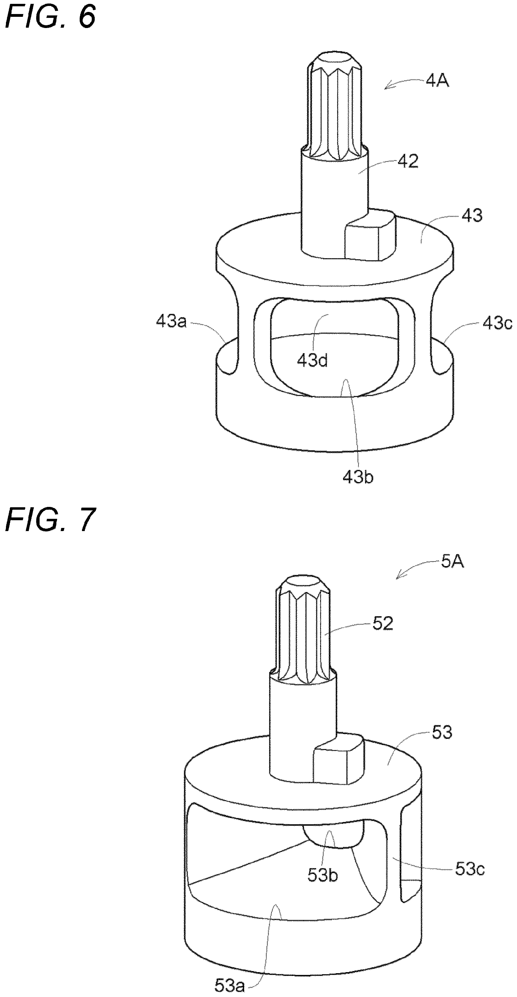

In the first rotary valve 4, the entire first valve body 4A is housed in the first valve chamber 4C. As shown in FIG. 6, the first valve body 4A includes a first shaft 42 rotated by the first actuator 4B, and a first valve main body 43 that rotates integrally with the first shaft 42. The first valve main body 43 has a cylindrical shape with walls on upper, lower, and side surfaces thereof, and a side wall 43d is formed with a first flow hole 43a, a second flow hole 43b, and a third flow hole 43c, which are through holes. The first flow hole 43a, the second flow hole 43b, and the third flow hole 43c are adjacently disposed, spaced apart in intervals of 90 degrees in a circumferential direction, and are connected to each other inside the first valve main body 43. Each of the first flow hole 43a, the second flow hole 43b, and the third flow hole 43c has a substantially rectangular shape and has an identical opening area. The opening areas of the first flow hole 43a, the second flow hole 43b, and the third flow hole 43c are larger than opening areas of a first communication hole 131 (an example of an inlet), a second communication hole 132, and a third communication hole 133 to be described later (refer to FIG. 8).

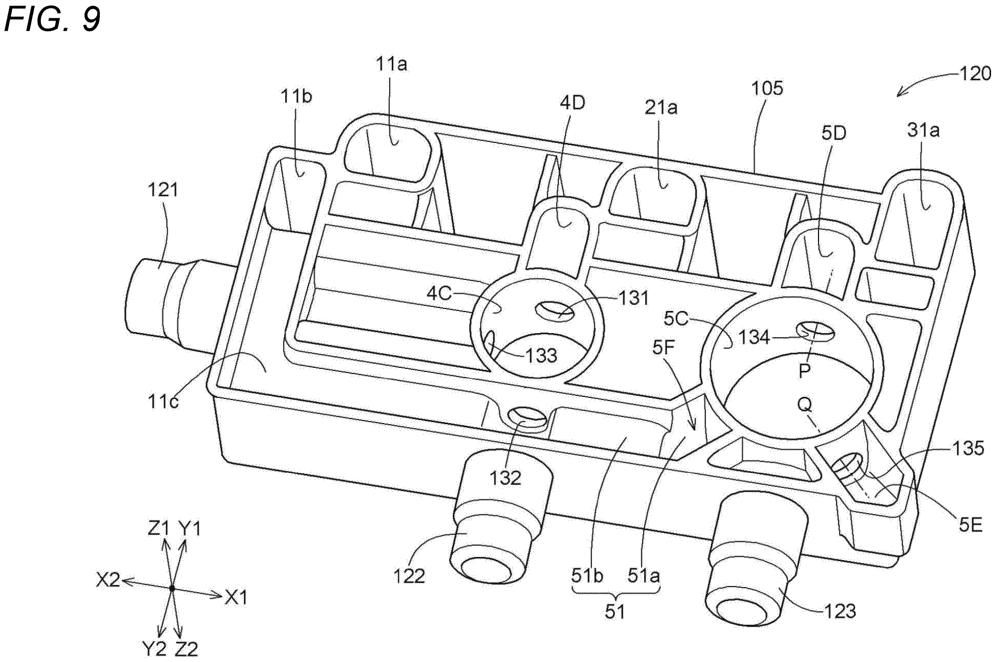

In the second rotary valve 5, the entire second valve body 5A is housed in the second valve chamber 5C. As shown in FIG. 7, the second valve body 5A includes a second shaft 52 rotated by the second actuator 5B, and a second valve main body 53 that rotates integrally with the second shaft 52. The second valve main body 53 has a columnar shape, and a fourth flow hole 53a and a fifth flow hole 53b are formed in a side wall 53c. The fourth flow hole 53a and the fifth flow hole 53b are connected to each other inside the second valve main body 53. The fourth flow hole 53a and the fifth flow hole 53b are disposed spaced apart from each other by 180 degrees in the circumferential direction. Each of the fourth flow hole 53a and the fifth flow hole 53b has a rectangular shape, and an opening area of the fourth flow hole 53a is larger than an opening area of the fifth flow hole 53b. The opening area of the fifth flow hole 53b is substantially equal to an opening area of each of a fifth communication hole 135 (an example of an outlet), a sixth communication hole 136, and a seventh communication hole 137 (an example of the outlet) to be described later. The fourth flow hole 53a has such an area to face the fourth communication hole 134 (an example of the inlet) to be described later, even if the fifth flow hole 53b faces any one of the fifth communication hole 135, the sixth communication hole 136, and the seventh communication hole 137 when the second valve main body 53 rotated about the second shaft 52 (refer to FIG. 8). Note that, as shown in FIGS. 8 and 9, the fourth communication hole 134, the fifth communication hole 135, the sixth communication hole 136, and the seventh communication hole 137 are disposed such that an axis P of the fourth communication hole 134, an axis Q of the fifth communication hole 135, an axis R of the sixth communication hole 136, and an axis S of the seventh communication hole 137 are all on the same plane. By disposing the communication holes in this manner, heights of the inlet and outlet can be aligned, and thus a height of the second rotary valve 5 can be lowered, and thus the cooling module 10 can be downsized.

### [Flow of cooling water in cooling module]

Next, the flow of the cooling water in the cooling module 10 will be described with reference to FIG. 3 and FIGS. 8 to 10. First, the flow of the cooling water in the first circulation path 1 (refer to FIG. 11) will be described. As shown in FIG. 3, the cooling water cooled by the radiator 1B enters the second housing 120 of the cooling module 10 from the first inflow port 111, flows through the downward first sub-channel 11a in the Z2 direction, and flows into the first water pump 1A. The cooling water pumped by the first water pump 1A flows in the Z direction, through an upward first sub-channel 11b formed along the Z1 direction, and a lateral first sub-channel 11c (an example of the channel) branches from the upward first sub-channel 11b at the joining surface 105 between the first housing 110 and the second housing 120. As described above, because the first outflow port 114 is formed on the first housing 110, the cooling water flowing from the second housing 120 to the first housing 110 in the Z1 direction through the upward first sub-channel 11b changes a flowing direction in the X2 direction and flows out from the first outflow port 114. The cooling water flowing out of the cooling module 10 from the first outflow port 114 cools the DC-DC converter 1D and the charger 1E, and returns to the radiator 1B via the reserve tank 1F (refer to FIG. 1).

The lateral first sub-channel 11c is formed across the first housing 110 and the second housing 120, and is formed along the Y direction. That is, the lateral first sub-channel 11c is formed along the joining surface 105 between the first housing 110 and the second housing 120, and an upper half of the lateral first sub-channel 11c is formed in the first housing 110 and a lower half thereof is formed in the second housing 120. Then, the first housing 110 and the second housing 120 are j oined to each other to form the lateral first sub-channel 11c. The cooling water flows through the lateral first sub-channel 11c in the Y2 direction and flows out of the cooling module 10 from the second outflow port 115 provided at a downstream end of the lateral first sub-channel 11c. The cooling water flowing out from the second outflow port 115 cools the inverter/motor 1C and returns to the radiator 1B via the reserve tank 1F (refer to FIG. 1). Note that the upward first sub-channel 11b and the lateral first sub-channel 11c constitute a part of the first channel 11.

Next, a flow of the cooling water in the second circulation path 2 (refer to FIG. 11) will be described. As shown in FIG. 3, the cooling water cooled by the heater core 2B enters the second housing 120 of the cooling module 10 from the second inflow port 112, flows through the downward second sub-channel 21a in the Z2 direction, and flows into the second water pump 2A. The cooling water pumped by the second water pump 2A flows in the Z1 direction through an upward second sub-channel 21b (an example of the channel and an inflow channel) formed along the Z direction. A first spare chamber 4D, which is a space communicating with the upward second sub-channel 21b, is formed at a downstream end of the upward second sub-channel 21b. The first spare chamber 4D is disposed so as to be adjacent to a first valve chamber 4C of the first rotary valve 4 in the Y1 direction. The first spare chamber 4D includes the first communication hole 131 opened along the Y direction, and communicates with the first valve chamber 4C through the first communication hole 131. By providing the first spare chamber 4D, it is possible to change the flowing direction of the cooling water flowing through the upward second sub-channel 21b in the Z1 direction to the Y2 direction, and cause the cooling water to flow into the first valve chamber 4C from the first communication hole 131. That is, the upward second sub-channel 21b is disposed so as not to overlap the first communication hole 131 as viewed in a lateral view (as viewed in parallel to the X-Y plane). Note that the first valve chamber 4C and the first spare chamber 4D are formed across the second housing 120 and the first housing 110. Thus, flexibility in a shape (size, height) of the first spare chamber 4D is increased, and flexibility in routing the upward second sub-channel 21b can be increased.

The first valve chamber 4C houses the first valve body 4A so that the first valve body 4A is rotatable about the first shaft 42 along the Z direction. All the cooling water flowing through the upward second sub-channel 21b flows into the first valve chamber 4C through the first spare chamber 4D and the first communication hole 131. The first valve chamber 4C communicates with a lateral second sub-channel 21c (an example of the channel) through a second communication hole 132 opened along the Y direction, and communicates with a fourth channel 41 through a third communication hole 133 opened along the X direction. The lateral second sub-channel 21c extends along the Y direction, the fourth channel 41 extends along the X direction, and both the lateral second sub-channel 21c and the fourth channel 41 are formed in the second housing 120 (refer to FIG. 3). Note that the downward second sub-channel 21a, the upward second sub-channel 21b, the lateral second sub-channel 21c, the first valve chamber 4C, and the first spare chamber 4D constitute a part of the second channel 21, whereas the fourth channel 41 is not a part of the second channel 21 and does not constitute the second circulation path 2.

In the state shown in FIG. 8, the third flow hole 43c of the first valve body 4A faces the first communication hole 131, and the first flow hole 43a faces the second communication hole 132, whereas the third communication hole 133 faces the side wall 43d and is closed. Thus, the cooling water flowing into the first valve chamber 4C flows through the lateral second sub-channel 21c (state of the second circulation path 2 in FIG. 11). Note that, although not shown, as viewed along the Z2 direction, when the first valve main body 43 is rotated about the first shaft 42 counterclockwise by 90 degrees, the second flow hole 43b faces the first communication hole 131, and the third flow hole 43c faces the third communication hole 133, whereas the second communication hole 132 faces the side wall 43d and is closed. Thus, the cooling water flowing into the first valve chamber 4C flows through the fourth channel 41. Thus, the first rotary valve 4 switches, between the lateral second sub-channel 21c and the fourth channel 41, the outflow channel of the cooling water flowing into the first valve chamber 4C via the first spare chamber 4D through the upward second sub-channel 21b formed in the cooling module 10.

The cooling water flowing from the first valve chamber 4C into the lateral second sub-channel 21c through the second communication hole 132 flows in the Y2 direction, and flows out of the cooling module 10 from the fourth outflow port 122. The cooling water flowing out from the fourth outflow port 122 returns to the heater core 2B via the water-cooled condenser 2C and the electric heater 2D (refer to FIG. 1). The cooling water flowing into the fourth channel 41 from the first valve chamber 4C through the third communication hole 133 flows in the X2 direction and flows out of the cooling module 10 from the third outflow port 121. The cooling water flowing out from the second outflow port 115 flows into the radiator 1B via the reserve tank 1F (refer to FIG. 1). The first rotary valve 4 causes the first actuator 4B to rotate the first valve body 4A about the axis along the Z direction, thereby causing the cooling water flowing through the upward second sub-channel 21b and flowing into the first valve chamber 4C to flow by switching between the lateral second sub-channel 21c and the fourth channel 41.

Next, a flow of the cooling water in the third circulation path 3 (refer to FIG. 11) will be described. As shown in FIG. 3, the cooling water cooled the battery 3B enters the second housing 120 of the cooling module 10 from the third inflow port 113, flows through the downward third sub-channel 31a in the Z2 direction, and flows into the third water pump 3A. The cooling water pumped by the third water pump 3A flows in the Z1 direction through an upward third sub-channel 31b (an example of the channel and an inflow channel) formed along the Z direction. The second spare chamber 5D, which is a space communicating with the upward third sub-channel 3 1b, is formed at a downstream end of the upward third sub-channel 31b. The second spare chamber 5D is disposed so as to be adjacent to the second valve chamber 5C (an example of the valve chamber) of the second rotary valve 5 in the Y1 direction. The second spare chamber 5D includes the fourth communication hole 134 opened along the Y direction, and communicates with the second valve chamber 5C through the fourth communication hole 134. By providing the second spare chamber 5D, it is possible to change the flowing direction of the cooling water flowing through the upward third sub-channel 3 1b in the Z1 direction to the Y2 direction, and cause the cooling water to flow into the second valve chamber 5C from the fourth communication hole 134. That is, the upward third sub-channel 3 1b is disposed so as not to overlap the fourth communication hole 134 in a lateral view. Note that the second valve chamber 5C and the second spare chamber 5D are formed across the second housing 120 and the first housing 110. Thus, flexibility in a shape (size, height) of the second spare chamber 5D is increased, and flexibility in routing the upward third sub-channel 31b can be increased.

As shown in FIG. 8, the second valve chamber 5C houses the second valve body 5A so that the second valve body 5A is rotatable about the second shaft 52 along the Z direction. All the cooling water flowing through the upward third sub-channel 31b flows into the second valve chamber 5C through the second spare chamber 5D and the fourth communication hole 134. The second valve chamber 5C includes the sixth communication hole 136 opened along the Y direction, and communicates with a lateral third sub-channel 31d through the sixth communication hole 136. Furthermore, the second valve chamber 5C includes the fifth communication hole 135 (an example of the outlet) and seventh communication hole 137 (an example of the outlet) opened adjacent to each other on both sides in a circumferential direction across the sixth communication hole 136, and communicates with the third spare chamber 5E and the fourth spare chamber 5F trough the fifth communication hole 135 and the seventh communication hole 137, respectively. The third spare chamber 5E and the fourth spare chamber 5F are formed across the second housing 120 and the first housing 110. Thus, flexibility in a shape (size, height) of the third spare chamber 5E and the fourth spare chamber 5F is increased, and flexibility in routing an L-shaped third sub-channel 31c and the communication channel 51 can be increased.

In the state shown in FIG. 8, the fourth flow hole 53a of the second valve body 5A faces the fourth communication hole 134, and the fifth flow hole 53b faces the fifth communication hole 135, whereas the sixth communication hole 136 and the seventh communication hole 137 face the side wall 53c and are closed. Thus, the cooling water flowing into the second valve chamber 5C flows through the third spare chamber 5E. That is, the cooling water flowing into the second valve chamber 5C flows through the L-shaped third sub-channel 31c (an example of the channel and the outflow channel) to be described later. Note that, although not shown, as viewed along the Z2 direction, when the second valve main body 53 is rotated about the second shaft 52 clockwise by 45 degrees, the fifth flow hole 53b faces the sixth communication hole 136 while the fourth flow hole 53a remains facing the fourth communication hole 134. Then, when the second valve main body 53 is further rotated about the second shaft 52 clockwise by 45 degrees, the fifth flow hole 53b faces the seventh communication hole 137 while the fourth flow hole 53a still remains facing the fourth communication hole 134. Thus, the second rotary valve 5 switches, among the third spare chamber 5E (L-shaped third sub-channel 31c), the lateral third sub-channel 31d, and the fourth spare chamber 5F (communication channel 51), the outflow channel of the cooling water flowing into the second valve chamber 5C via the second spare chamber 5D through the upward third sub-channel 31b formed in the cooling module 10.

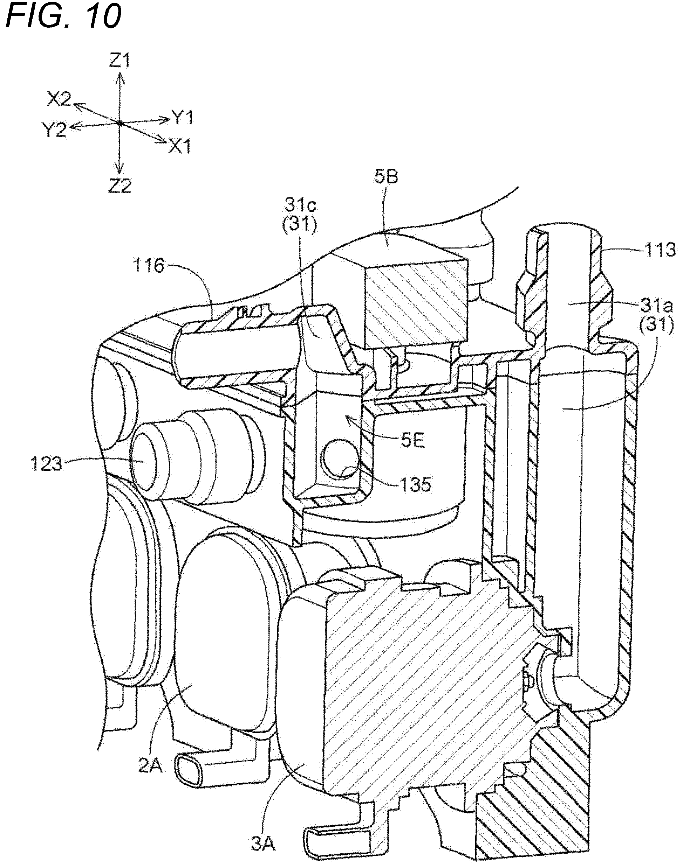

As shown in FIG. 10, the third spare chamber 5E communicates with the fifth outflow port 116 through the L-shaped third sub-channel 31c extending along the Z direction. By providing the third spare chamber 5E, it is possible to change the flowing direction of the cooling water, which flows in a direction perpendicular to the Z direction into the third spare chamber 5E from the second valve chamber 5C through the fifth communication hole 135, to the Z1 direction to cause the cooling water to flow through the L-shaped third sub-channel 31c and flow out of the cooling module 10 from the fifth outflow port 116. That is, the L-shaped third sub-channel 31c is disposed so as not to overlap the fifth communication hole 135 in the lateral view. The cooling water flowing out from the fifth outflow port 116 returns to the battery 3B via the electric heater 3D (refer to FIG. 1). The cooling water flowing from the second valve chamber 5C into the lateral third sub-channel 31d through the sixth communication hole 136 flows in the Y2 direction, and flows out of the cooling module 10 from the sixth outflow port 123. The cooling water flowing out from the sixth outflow port 123 returns to the battery 3B via the chiller 3C (refer to FIG. 1). Note that the downward third sub-channel 31a, the upward third sub-channel 31b, the L-shaped third sub-channel 31c, the lateral third sub-channel 31d, the second valve chamber 5C, the second spare chamber 5D, and the third spare chamber 5E constitute a part of the third channel 31.

As shown in FIGS. 3 and 9, the fourth spare chamber 5F communicates with the communication channel 51 extending in the Z direction from the fourth spare chamber 5F and then bent, extending in the X direction. That is, the communication channel 51 is disposed so as not to overlap the seventh communication hole 137 in the lateral view. In the communication channel 51, a first portion 51a extending in the Z direction is formed in the second housing 120, and a second portion 51b extending in the X direction is formed across the first housing 110 and the second housing 120. That is, the second portion 51b of the communication channel 51 is formed along the joining surface 105 between the first housing 110 and the second housing 120, and an upper half of the second portion 51b is formed in the first housing 110 and a lower half of the second portion 51b is formed in the second housing 120. The communication channel 51 is not a part of the third channel 31 and does not constitute the third circulation path 3.

As described above, the communication channel 51 allows first channel 11, second channel 21, and third channel 31 to communicate with each other in the cooling module 10. By providing the communication channel 51 in this manner, the three circulation paths through which the cooling water circulates can be integrated, and thus the number of pipes connected to the ports can be reduced, and lengths of the pipes can be shortened and simplified.

The second portion 51b of the communication channel 51 communicates with the lateral first sub-channel 11c at an end portion opposite to the fourth spare chamber 5F. Furthermore, the second portion 51b intersects with the lateral second sub-channel 21c when viewed along the Z direction. The second portion 51b is recessed in the Z2 direction to communicate with the lateral second sub-channel 21c at the intersection.

The second rotary valve 5 causes the second actuator 5B to rotate the second valve body 5A about the axis along the Z direction to cause the cooling water to flow from the upward third sub-channel 31b into the second valve chamber 5C by switching among three ways that are (1) causing the cooling water to flow from the fifth communication hole 135 through the third spare chamber 5E and the L-shaped third sub-channel 31c, and flow out from the fifth outflow port 116, (2) causing the cooling water to flow from the seventh communication hole 137 through the fourth spare chamber 5F and the communication channel 51, and flow out from the second outflow port 115, and (3) causing the cooling water to flow from the seventh communication hole 137 through the fourth spare chamber 5F and the communication channel 51 and the lateral second sub-channel 21c, and flow out from the second outflow port 115 and the fourth outflow port 122, and to flow from the sixth communication hole 136 through the lateral third sub-channel 31d and flow out from the sixth outflow port 123.

In the lateral view, the L-shaped third sub-channel 31c is disposed so as not to overlap the fifth communication hole 135, and the communication channel 51 is disposed so as not to overlap the seventh communication hole 137. Thus, by configuring the outflow channel and the outlet to have heights different from each other, flexibility in routing the outflow channel can be increased.

### [Second embodiment]

Next, a rotary valve 6 (an example of a cooling module valve) according to a second embodiment will be described with reference to the drawings. The rotary valve 6 of the present embodiment is used for a cooling module 20. The cooling module 20 is different from the cooling module 10 according to the above-described embodiment in a channel configuration.

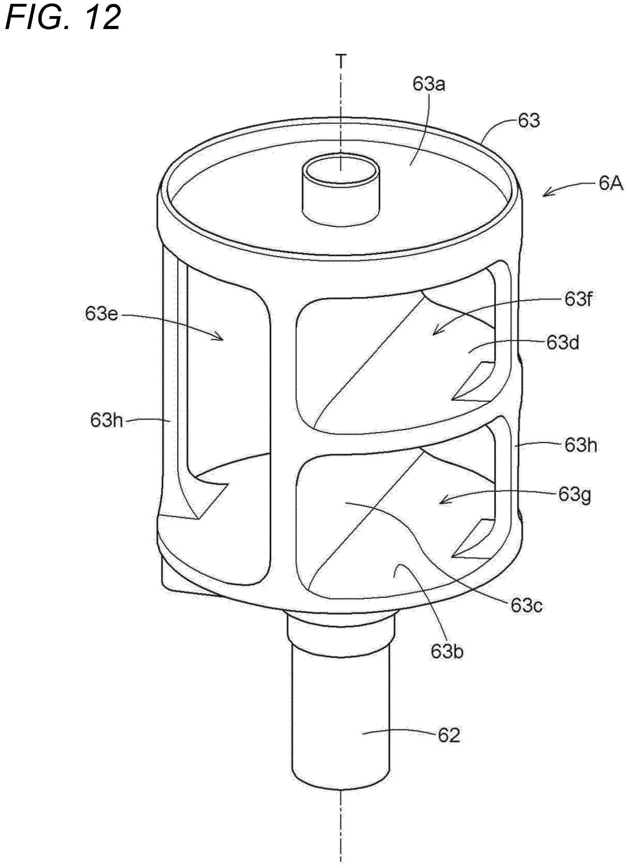

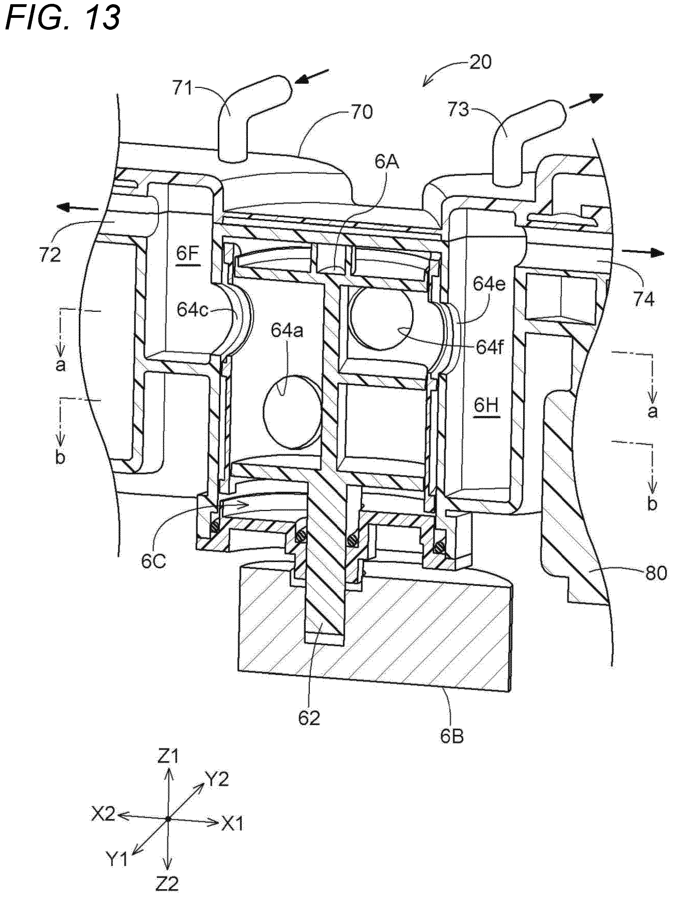

As shown in FIGS. 13 to 16, the rotary valve 6 includes a valve body 6A, a valve chamber 6C, a first spare chamber 6D (an example of an inflow spare chamber and a spare chamber), a second spare chamber 6E (an example of the outflow spare chamber and the spare chamber), a third spare chamber 6F (an example of the outflow spare chamber and the spare chamber), and a fourth spare chamber 6G (an example of the inflow spare chamber and the spare chamber). In the rotary valve 6, the entire valve body 6A is housed in the valve chamber 6C. As shown in FIG. 12, the valve body 6A includes a shaft 62 that rotates about a rotation axis T by an actuator 6B and a valve main body 63 that rotates integrally with the shaft 62. The valve main body 63 is formed with two disks 63a and 63b disposed spaced apart from each other in an up and down direction, a coupling plate 63c including the rotation axis T of the shaft 62 and disposed to connect the two disks 63a and 63b, a partition plate 63d having a semicircular shape and disposed at the center of the coupling plate 63c perpendicularly to the coupling plate 63c, and two support pillars connecting the two disks 63a and 63b. Then, the two disks 63a and 63b and the coupling plate 63c form a first valve space 63e (an example of a valve space). The disk 63a, the coupling plate 63c, and the partition plate 63d form a second valve space 63f (an example of the valve space). The disk 63b, the coupling plate 63c, and the partition plate 63d form a third valve space 63g (an example of the valve space). That is, the coupling plate 63c partitions the valve body 63 into a plurality of (two in the present embodiment) spaces (space formed by integrating the first valve space 63e, the second valve space 63f, and the third valve space 63g) in a circumferential direction. Furthermore, at least one of the spaces is further partitioned by the partition plate 63d into a plurality of (two in the present embodiment) spaces (the second valve space 63f and the third valve space 63g) in a direction along the rotation axis T. In a state where the valve body 6A is housed in the valve chamber 6C, the first valve space 63e, the second valve space 63f, and the third valve space 63g are partitioned by the disks 63a and 63b, the coupling plate 63c, and the partition plate 63d, and do not communicate with each other.

A manifold of the cooling module 20 is formed by joining and integrating a first housing 70 (an example of a resin housing) and a second housing 80 (an example of the resin housing), both made of resin, with a method such as vibration welding. In the second housing 80, the valve chamber 6C is disposed, and the first spare chamber 6D, the second spare chamber 6E, the third spare chamber 6F, the fourth spare chamber 6G, and the fifth spare chamber 6H are disposed adjacent to a periphery of the valve chamber 6C. The first spare chamber 6D, the second spare chamber 6E, the third spare chamber 6F, the fourth spare chamber 6G, and the fifth spare chamber 6H are formed across the second housing 80 and the first housing 70. Thus, flexibility in a shape (size, height) of each spare chamber is increased, and flexibility in routing inflow channels and outflow channels to be described later can be increased.

Hereinafter, a direction parallel to the section and perpendicular to the shaft 62 shown in FIG. 13 is defined as an X direction, a direction perpendicular to the section is defined as a Y direction, and a direction parallel to the shaft 62 is defined as a Z direction. Moreover, of the X direction, a direction from the valve body 6A toward the fifth spare chamber 6H is defined as an X1 direction, and an opposite direction thereof is defined as an X2 direction. Of the Y direction, a direction from the valve body 6A toward a third inflow channel 82 to be described later is defined as a Y2 direction, and an opposite direction thereof is defined as a Y1 direction. Of the Z direction, a direction from the second housing 80 toward the first housing 70 is defined as a Z1 direction, and an opposite direction thereof is defined as a Z2 direction. The Z2 direction is a gravity direction. That is, the first housing 70 is disposed on an upper side of the second housing 80 in a vertical direction.

As shown in FIGS. 13 to 16, the first spare chamber 6D is formed in the first housing 70, and is connected to a first inflow channel 71 (an example of the channel and the inflow channel) into which the cooling water flows. The second spare chamber 6E is formed in the second housing 80, and is connected to a second inflow channel 81 (an example of the channel and the inflow channel) into which the cooling water flows, through a seventh communication hole 64g (an example of the inlet). The third spare chamber 6F is formed across the first housing 70 and the second housing 80, and is connected to a first outflow channel 72 (an example of the channel and the outflow channel) from which the cooling water flows out, through an eighth communication hole 64h (an example of an outlet). The fourth spare chamber 6G is formed in the first housing 70, and is connected to a second outflow channel 73 (an example of the channel and the outflow channel) from which the cooling water flows out. A fifth spare chamber H is formed in the second housing 80 and is connected to a third outflow channel 74 (an example of the channel and the outflow channel) from which the cooling water flows out through a ninth communication hole 64i (an example of the outlet). Furthermore, the valve body 6A is formed in the second housing 80 and is connected to the third inflow channel 82 (an example of a channel) into which the cooling water flows. No spare chamber is formed between the third inflow channel 82 and the valve body 6A.

The valve body 6A and the first spare chamber 6D communicate with each other through a first communication hole 64a (an example of the inlet) formed in the valve chamber 6C. The valve body 6A and the second spare chamber 6E communicate with each other through a second communication hole 64b (an example of the inlet) formed in the valve chamber 6C. The valve body 6A and the third spare chamber 6F communicate with each other through a third communication hole 64c (an example of the outlet) formed in the valve chamber 6C. The valve body 6A and the fourth spare chamber 6G communicate with each other through a fourth communication hole 64d (an example of the outlet) formed in the valve chamber 6C. The valve body 6A and the fifth spare chamber 6H communicate with each other through a fifth communication hole 64e (an example of the outlet) formed in the valve chamber 6C. The valve body 6A and the third inflow channel 82 communicate with each other through a sixth communication hole 64f formed in the valve chamber 6C. At this time, the first communication hole 64a, the second communication hole 64b, and the fourth communication hole 64d are disposed at positions overlapping the third valve space 63g in a lateral view (as viewed in parallel to an X-Y plane) in the Z2 direction with respect to the partition plate 63d in the valve body 6A, and at this time, axes (not shown) of the first communication hole 64a, the second communication hole 64b, and the fourth communication hole 64d are on the same plane. Furthermore, the third communication hole 64c, the fifth communication hole 64e, and the sixth communication hole 64f are disposed at positions overlapping the second valve space 63f in a lateral view in the Z1 direction with respect to the partition plate 63d in the valve body 6A, and at this time, axes (not shown) of the third communication hole 64c, the fifth communication hole 64e, and the sixth communication hole 64f are on the same plane. Thus, because height positions of the inlet and the outlet can be aligned to two kinds of different heights, a height of the rotary valve 6 can be lowered as compared with a rotary valve in which a plurality of inlets and outlets are disposed such that height positions thereof are different from each other, and thus the cooling module 20 can be downsized. For example, the first communication hole 64a and the third communication hole 64c have different height positions, and communicate with each other via the first valve space 63e of the valve body 6A disposed in the valve chamber 6C.

### [Flow of cooling water in cooling module]

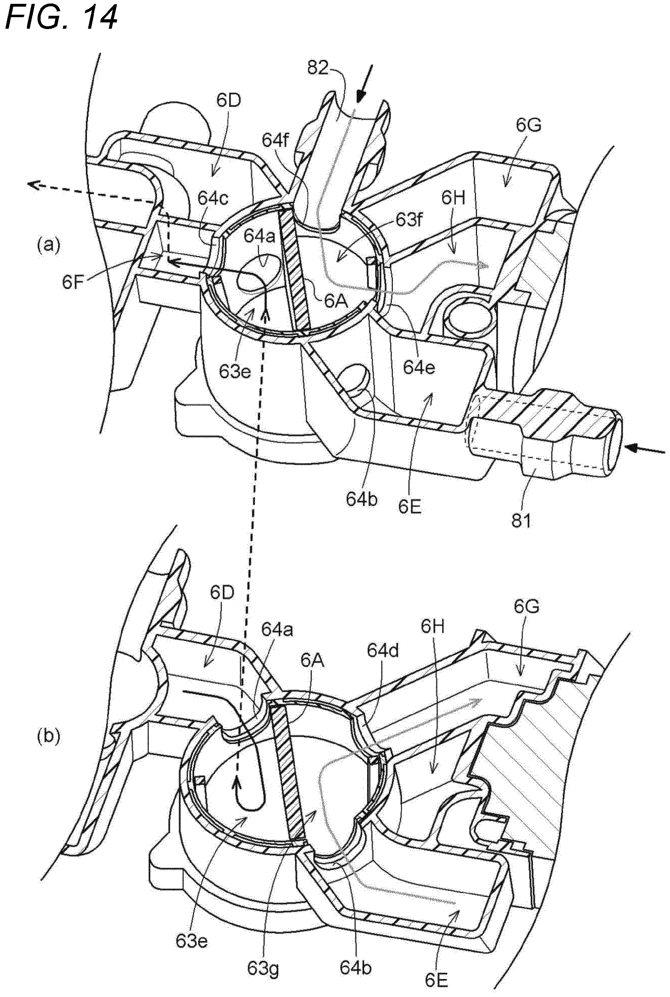

Next, the flow of the cooling water in the cooling module 20 will be described with reference FIGS. 14 to 16. In the cooling module 20 of the present embodiment, the rotary valve 6 switches between the channels in three ways. Depending on each position of the valve body 6A, the positions are referred to as a first position, a second position, and a third position. Note that FIG. 14A, FIG. 15A, and FIG. 16A are cross-sectional views taken along the line a-a in FIG. 13, and FIG. 14B, FIG. 15B, and FIG. 16B are cross-sectional views taken along the line b-b in FIG. 13.

In the first position shown in FIG. 14, the first valve space 63e of the valve body 6A faces the first spare chamber 6D and the third spare chamber 6F, the second valve space 63f of the valve body 6A faces the third inflow channel 82 and the fifth spare chamber 6H, and the third valve space 63g of the valve body 6A faces the second spare chamber 6E and the fourth spare chamber 6G. At this time, the cooling water flowing into the first spare chamber 6D from the first inflow channel 71 flows into the third spare chamber 6F through the first communication hole 64a, the first valve space 63e, and the third communication hole 64c, and flows out to the first outflow channel 72 (refer to FIG. 13 also). The cooling water flowing into the third inflow channel 82 flows into the fifth spare chamber 6H through the sixth communication hole 64f, the second valve space 63f, and the fifth communication hole 64e, and flows out to the third outflow channel 74 (refer to FIG. 13 also). The cooling water flowing into the second spare chamber 6E from the second inflow channel 81 flows into the fourth spare chamber 6G through the second communication hole 64b, the third valve space 63g, and the fourth communication hole 64d, and flows out to the second outflow channel 73 (refer to FIG. 13 also).

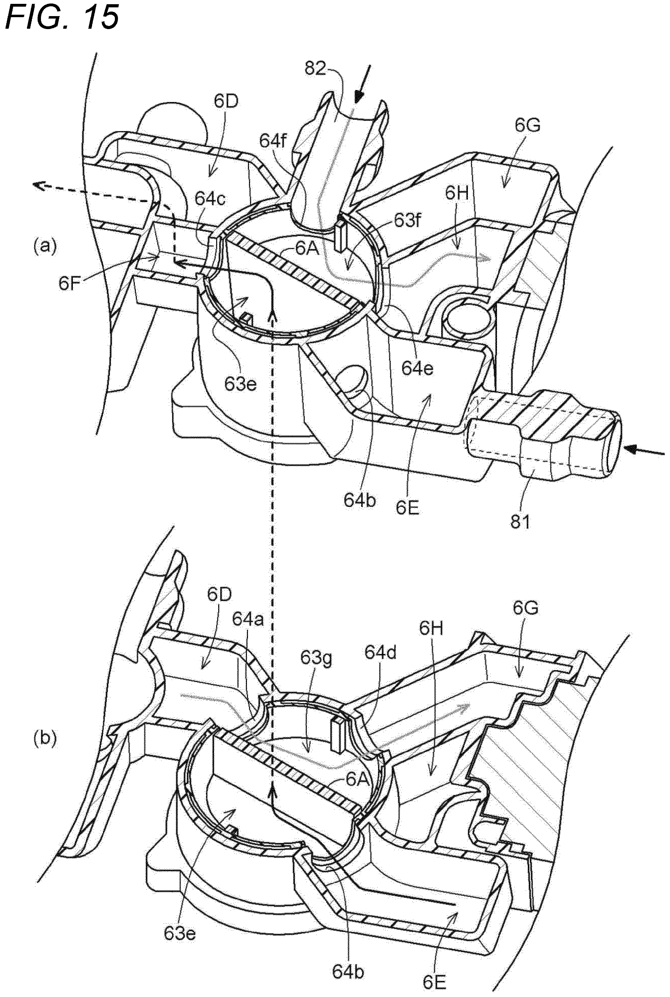

In the second position shown in FIG. 15, the first valve space 63e of the valve body 6A faces the second spare chamber 6E and the third spare chamber 6F, the second valve space 63f of the valve body 6A faces the third inflow channel 82 and the fifth spare chamber 6H, and the third valve space 63g of the valve body 6A faces the first spare chamber 6D and the fourth spare chamber 6G. At this time, the cooling water flowing into the second spare chamber 6E from the second inflow channel 81 flows into the third spare chamber 6F through the second communication hole 64b, the first valve space 63e, and the third communication hole 64c, and flows out to the first outflow channel 72 (refer to FIG. 13 also). The cooling water flowing into the third inflow channel 82 flows into the fifth spare chamber 6H through the sixth communication hole 64f, the second valve space 63f, and the fifth communication hole 64e, and flows out to the third outflow channel 74 (refer to FIG. 13 also). The cooling water flowing into the first spare chamber 6D from the first inflow channel 71 flows into the fourth spare chamber 6G through the first communication hole 64a, the third valve space 63g, and the fourth communication hole 64d, and flows out to the second outflow channel 73 (refer to FIG. 13 also).

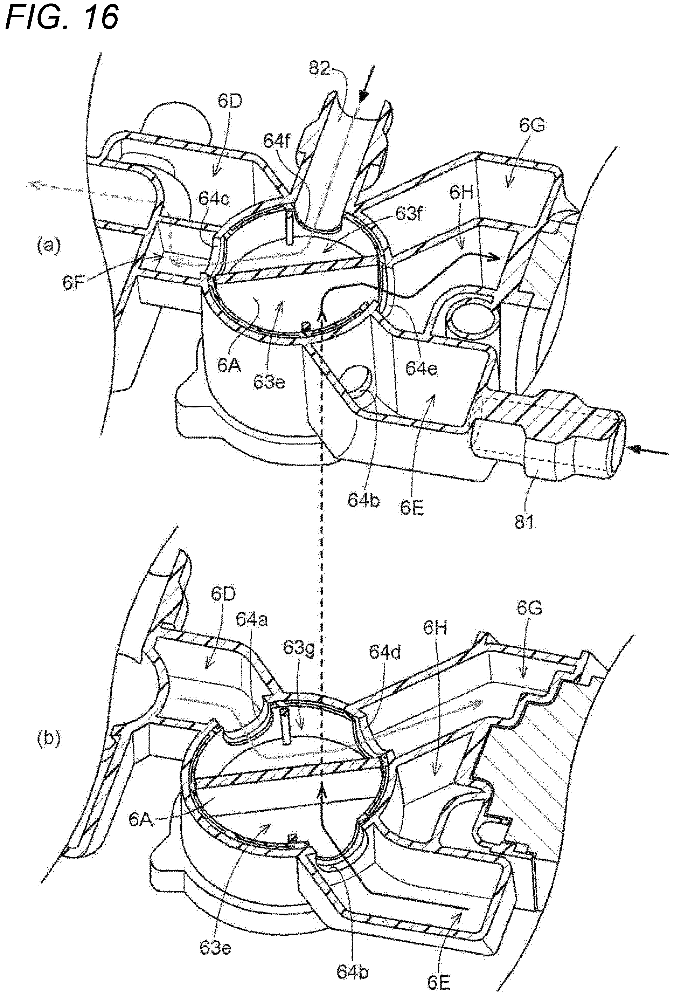

In the third position shown in FIG. 16, the first valve space 63e of the valve body 6A faces the second spare chamber 6E and the fifth spare chamber 6H, the second valve space 63f of the valve body 6A faces the third inflow channel 82 and the third spare chamber 6F, and the third valve space 63g of the valve body 6A faces the first spare chamber 6D and the fourth spare chamber 6G. At this time, the cooling water flowing into the second spare chamber 6E from the second inflow channel 81 flows into the fifth spare chamber 6H through the second communication hole 64b, the first valve space 63e, and the fifth communication hole 64e, and flows out to the third outflow channel 74 (refer to FIG. 13 also). The cooling water flowing into the third inflow channel 82 flows into the third spare chamber 6F through the sixth communication hole 64f, the second valve space 63f, and the third communication hole 64c, and flows out to the first outflow channel 72 (refer to FIG. 13 also). The cooling water flowing into the first spare chamber 6D from the first inflow channel 71 flows into the fourth spare chamber 6G through the first communication hole 64a, the third valve space 63g, and the fourth communication hole 64d, and flows out to the second outflow channel 73 (refer to FIG. 13 also).

Thus, because the first spare chamber 6D is provided, even if the first inflow channel 71 is disposed above and spaced apart from (in the Z1 direction) the rotary valve 6 and extends along the Z direction, the cooling water can be caused to flow into the valve chamber 6C by changing a flowing direction thereof by 90 degrees. Furthermore, because the third spare chamber 6F is provided, even if the first outflow channel 72 is disposed above and spaced apart from the rotary valve 6 and extends along the X direction, the cooling water flowing out from the valve chamber 6C can be changed in height in the Z direction to flow through the first outflow channel 72. Moreover, because the fourth spare chamber 6G is provided, even if the second outflow channel 73 is disposed above and spaced apart from the rotary valve 6 and extends along the Z direction, the cooling water flowing out from the valve chamber 6C can be changed in height and direction in the Z direction to flow through the second outflow channel 73. Moreover, because the fifth spare chamber 6H is provided, even if the third outflow channel 74 is disposed above and spaced apart from the rotary valve 6 and extends along the X direction, the cooling water flowing out from the valve chamber 6C can be changed in height in the Z direction to flow through the third outflow channel 74. Therefore, disposition of the inflow channel and the outflow channel is not restricted by height (length along the Z direction) of the rotary valve 6. Furthermore, because it is possible to configure the inflow channel and the inlet and/or the outflow channel and the outlet to have heights different from each other, flexibility in routing the inflow channel and the outflow channel can be increased.

### [Third embodiment]

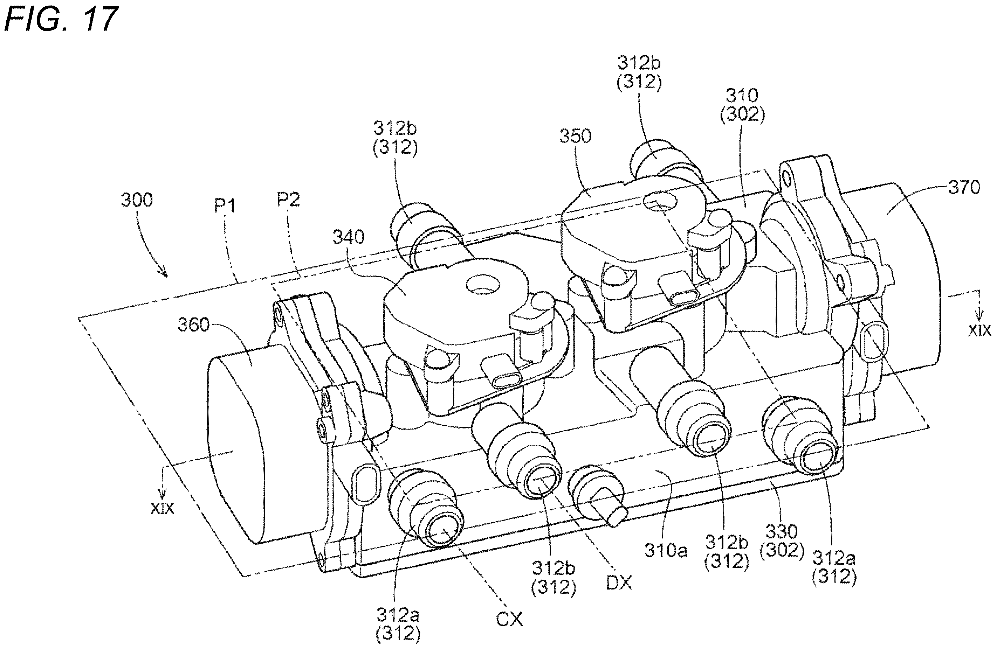

Next, a cooling module 300 using a first rotary valve 340 (an example of a cooling module valve) and a second rotary valve 350 (an example of the cooling module valve) according to a third embodiment will be described with reference to FIGS. 17 to 20. The cooling module 300 of the present embodiment is different in a channel configuration from the cooling modules 10 and 20 according to each of the above-described embodiments.

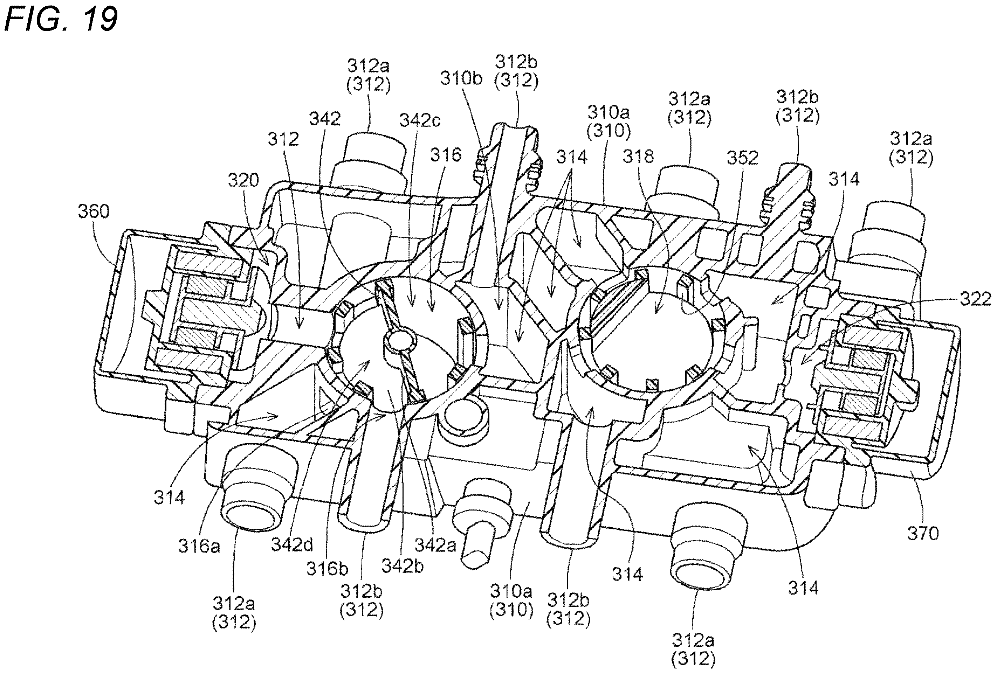

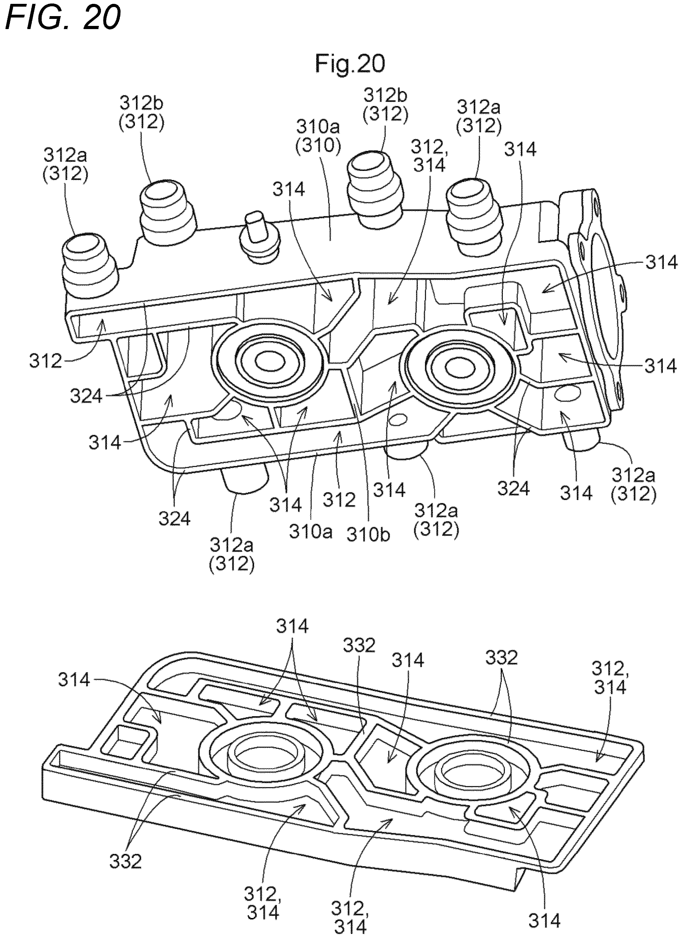

As shown in FIG. 17, the cooling module 300 according to the present embodiment includes the first rotary valve 340, the second rotary valve 350, a first water pump 360 (an example of a water pump), a second water pump 370 (an example of the water pump), and a manifold 302 in which a plurality of channels 312 (an example of an inflow channel and an outflow channel) (refer to FIG. 19) through which cooling water flows are formed. The manifold 302 is formed by joining and integrating a plurality of housings, and in the present embodiment, as shown in FIG. 20, is formed by joining a first housing 310 and a second housing 330.

The plurality of channels 312 shown in FIG. 19 is a concept including both inflow channels through which the cooling water flows into the first rotary valve 340 or the second rotary valve 350 and outflow channels through which the cooling water flows out from the first rotary valve 340 or the second rotary valve 350. Furthermore, the plurality of channels 312 are a concept including all channels through which the cooling water flows inside the manifold 302, such as channels formed only in the first housing 310, channels formed only in the second housing 330, and channels formed across the first housing 310 to the second housing 330.

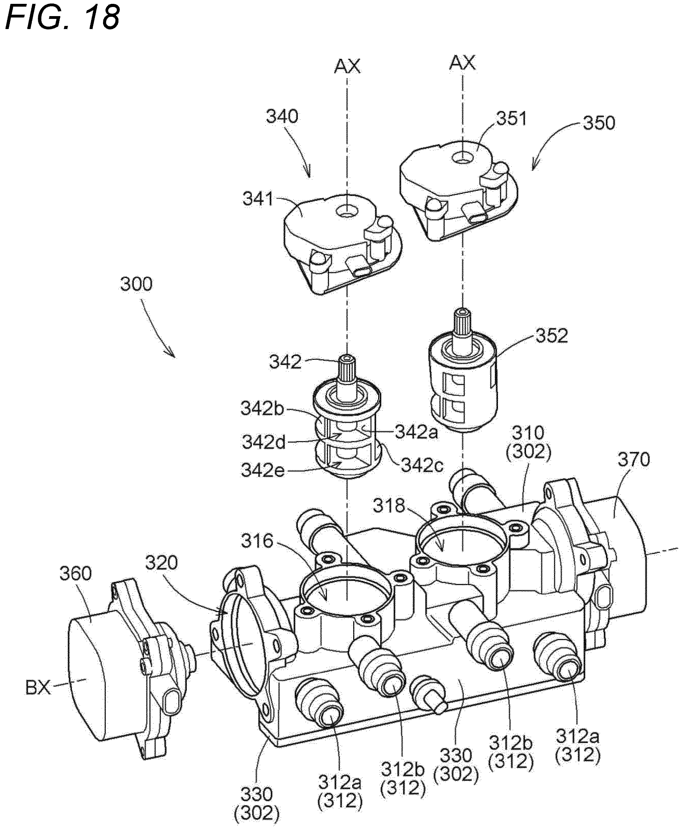

Of the channels 312 in the present embodiment, a plurality of (five in the present embodiment) channels 312 each having a portion protruding outward from the outer wall 310a of the first housing 310 is disposed on a side close to the second housing 330 in a direction along a rotation axis AX of the first rotary valve 340, and a plurality of (four in the present embodiment) channels 312 each having a portion protruding outward from the outer walls 310a of the first housing 310 is disposed on a side far from the second housing 330 in the direction along the rotation axis AX of the first rotary valve 340. Specifically, the five channels 312 for which an entire external appearance of a protruding portion thereof is drawn in FIG. 19 are the channels 312 on the side close to the second housing 330. Meanwhile, the four channels 312 for which protruding portion thereof is drawn in cross-section are the channels 312 on the side far from the second housing 330. Central axes along the protruding directions of the nine channels 312 are all perpendicular to the rotation axis AX (refer to FIG. 18). Among the nine channels 312, the five channels 312 disposed on the side close to the second housing 330 intersect a virtual plane P1 that passes through a central axis CX of a protruding portion of any one of the five channels 312 and is perpendicular to the rotation axis AX (refer to FIG. 17). A set of the five channels 312 in such a positional relationship is referred to as a first channel group 312a. Furthermore, the four channels 312 other than the five channels 312 in the first channel group 312a intersect a virtual plane P2 that passes through a central axis DX of a protruding portion of any one of the four channels 312 and is perpendicular to the rotation axis AX (refer to FIG. 17). A set of the four channels 312 in such a positional relationship is referred to as a second channel group 312b. That is, the second channel group 312b is disposed so as to be offset with respect to the first channel group 312a in the direction along the rotation axis AX.

As shown in FIG. 19, at least one channel 312 of each of the first channel group 312a and the second channel group 312b communicates with a first valve chamber 316 (an example of the valve chamber) through a first communication hole 316a (an example of the inlet or the outlet) and a second communication hole 316b (an example of the inlet or the outlet). An axis (not shown) of the first communication hole 316a and an axis (not shown) of the second communication hole 316b are different in height position from each other in the direction along the rotation axis AX.

In the manifold 302 of the present embodiment, as shown in FIGS. 17 to 19, the first rotary valve 340, the second rotary valve 350, the first water pump 360, and the second water pump 370 are all mounted on the first housing 310. The first rotary valve 340 and the first water pump 360 are disposed adjacent to each other, and the second rotary valve 350 and the second water pump 370 are disposed adjacent to each other. The rotation axis AX of the first rotary valve 340 and the rotation axis AX of the second rotary valve 350 are parallel to each other, and a rotation axis BX of the first water pump 360 and the rotation axis BX of the second water pump 370 are parallel to each other. Then, the rotation axes AX of the first rotary valve 340 and the second rotary valve 350 and the rotation axes BX of the first water pump 360 and the second water pump 370 are perpendicular to each other. In the second housing 330, only some of the plurality of channels 312 are formed (refer to FIG. 20).

The first rotary valve 340 includes a first actuator 341, a first valve body 342 (an example of a valve body), a first valve chamber 316, and a plurality of spare chambers 314 (an example of an inflow spare chamber or an outflow spare chamber) formed around the first valve chamber 316. The second rotary valve 350 includes a second actuator 351, a second valve body 352 (an example of the valve body), a second valve chamber 318 (an example of the valve chamber), and a plurality of spare chambers 314 formed around the second valve chamber 318. The first valve chamber 316, the second valve chamber 318, and the spare chambers 314 are formed in the first housing 310. The first valve chamber 316 and the second valve chamber 318 house the entire first valve body 342 and the entire second valve body 352, respectively. The first valve chamber 316 and the second valve chamber 318 are disposed at a central region 310b positioned between a pair of opposing outer walls 310a formed in the first housing 310, and between the first water pump 360 and the second water pump 370.

The first actuator 341 and the second actuator 351 are exposed on a surface of the first housing 310. Similarly to the valve body 6A of the rotary valve 6 of the second embodiment, the first valve body 342 is partitioned into a plurality of (two in the present embodiment) spaces in a circumferential direction by a coupling plate 342a, and at least one (one in the present embodiment) space is further partitioned into a plurality of (two in the present embodiment) spaces in the direction along the rotation axis AX by a partition plate 342b. A space defined by the coupling plate 342a and having no partition plate 342b therein is referred to as a first valve space 342c, and a space defined by the coupling plate 342a and the partition plate 342b is referred to as a second valve space 342d and a third valve space 342e (refer to FIG. 18). Note that, similarly to the first valve body 342, the second valve body 352 is also partitioned into three valve spaces. Note that the first communication hole 316a and the second communication hole 316b communicate with each other when facing the first valve space 342c of the first valve body 342, and when there is the partition plate 342b therebetween, the first communication hole 316a and the second communication hole 316b do not communicate with each other, and face either the second valve space 342d or the third valve space 342e.

The plurality of spare chambers 314 are formed between the channel 312 and the first valve chamber 316, and between the channel 312 and the second valve chamber 318. The channel 312 and the first valve chamber 316, and the channel 312 and the second valve chamber 318 communicate with each other via the spare chambers 314. The spare chamber 314 is a concept including both an inflow spare chamber connected to an inflow channel and an outflow spare chamber connected to an outflow channel. In the present embodiment, the spare chambers 314 are disposed in all the channels 312 communicating with the first valve chamber 316 and in all the channels 312 communicating with the second valve chamber 318. The plurality of channels 312 and the plurality of spare chambers 314 are radially arranged so as to surround each of the first valve chamber 316 and the second valve chamber 318.

As shown in FIG. 20, the first housing 310 is formed with a first partition wall 324 (an example of a partition wall) that partitions two adjacent ones of the channels 312, the first valve chamber 316, the second valve chamber 318, the spare chambers 314, a first vortex chamber 320, and a second vortex chamber 322. The first housing 310 includes only the channels 312, the first valve chamber 316, the second valve chamber 318, the spare chambers 314, the first vortex chamber 320, the second vortex chamber 322, and the first partition wall 324.

The second housing 330 is formed with a second partition wall 332 (an example of the partition wall) that partitions two adjacent ones of some of the plurality of channels 312 and spare chambers 314 formed in the second housing 330. The manifold 302 is formed by joining the first partition wall 324 of the first housing 310 and the second partition wall 332 of the second housing 330.

### [Fourth embodiment]

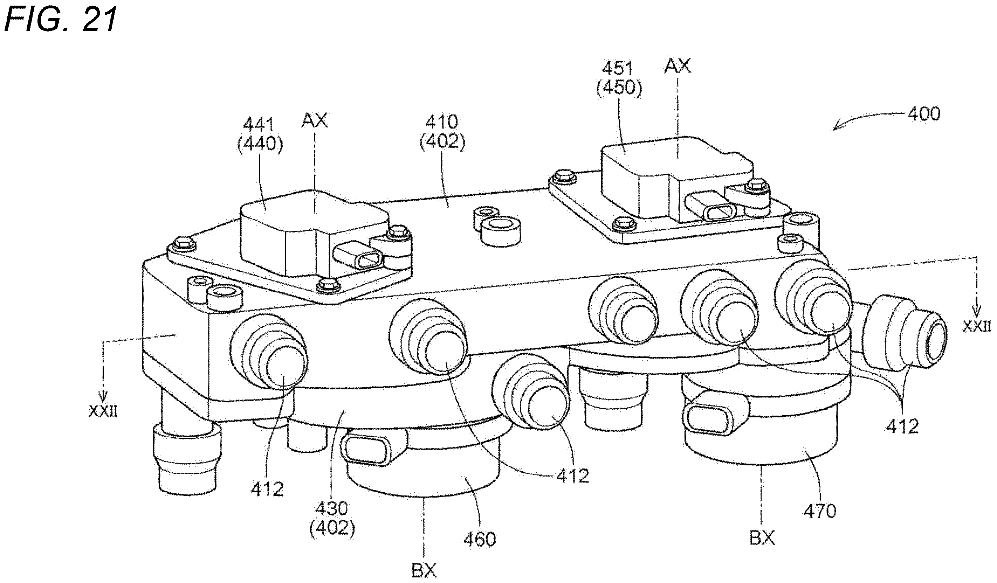

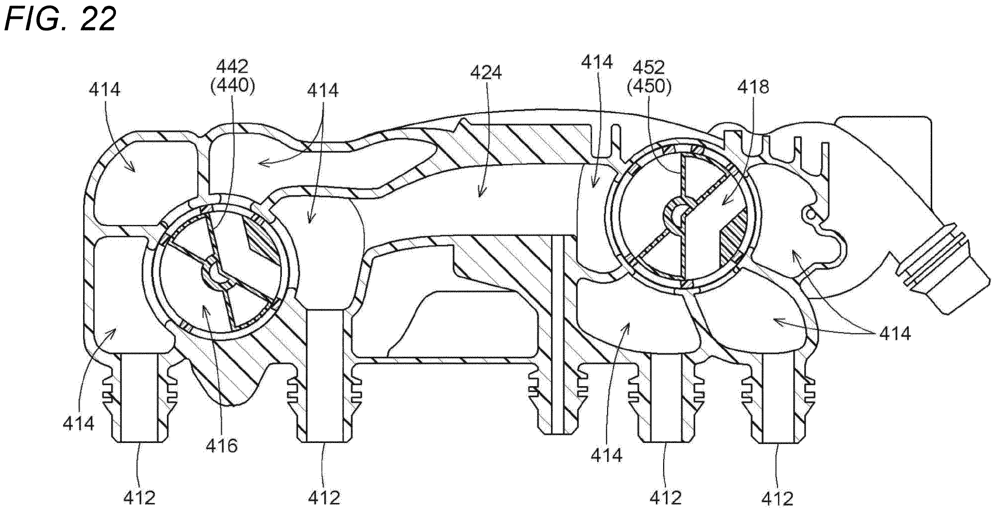

Next, a cooling module 400 using a first rotary valve 440 (an example of a cooling module valve) and a second rotary valve 450 (an example of the cooling module valve) according to a fourth embodiment will be described with reference to FIGS. 21 and 22. The cooling module 400 of the present embodiment is different in a channel configuration from the cooling modules 10, 20, and 300 according to each of the above-described embodiments.

The cooling module 400 according to the present embodiment includes the first rotary valve 440, the second rotary valve 450, a first water pump 460 (an example of a water pump), a second water pump 470 (an example of the water pump), and a manifold 402 in which a plurality of channels 412 through which cooling water flows are formed. The manifold 402 is formed by joining and integrating a plurality of housings, and in the present embodiment, is formed by joining a first housing 410 and a second housing 430. Note that the plurality of channels 412 are a concept including both inflow channels through which the cooling water flows into the first rotary valve 440 or the second rotary valve 450 and outflow channels through which the cooling water flows out from the first rotary valve 440 or the second rotary valve 450. Furthermore, the plurality of channels 412 are a concept including all channels through which the cooling water flows inside the manifold 402, such as channels formed only in the first housing 410, channels formed only in the second housing 430, and channels formed across the first housing 410 to the second housing 430.

In the manifold 402 of the present embodiment, the first rotary valve 440 and the second rotary valve 450 are mounted on the first housing 410, and the first water pump 460 and the second water pump 470 are mounted on the second housing 430. A rotation axis AX of the first rotary valve 440, a rotation axis AX of the second rotary valve 450, a rotation axis BX of the first water pump 360, and a rotation axis BX of the second water pump 370 are all parallel to each other.

As shown in FIG. 22, the first rotary valve 440 includes a first actuator 441, a first valve body 442 (an example of a valve body), a first valve chamber 416 (an example of a valve chamber), and spare chambers 414 formed around the first valve chamber 416. The second rotary valve 450 includes a second actuator 451, a second valve body 452 (an example of the valve body), a second valve chamber 418 (an example of the valve chamber), and the spare chambers 414 formed around the second valve chamber 418. The first valve chamber 416, the second valve chamber 418, and the spare chambers 414 are formed in the first housing 410. The first valve chamber 416 and the second valve chamber 418 house the entire first valve body 442 and the entire second valve body 452, respectively. The first actuator 441 and the second actuator 451 are exposed on a surface of the first housing 410.

The spare chambers 414 are formed between the channel 412 and the first valve chamber 416, and between the channel 412 and the second valve chamber 418. The channel 412 and the first valve chamber 416, and the channel 412 and the second valve chamber 418 communicate with each other via the spare chambers 414. The spare chambers 414 is a concept including both an inflow spare chamber connected to an inflow channel and an outflow spare chamber connected to an outflow channel. In the present embodiment, the spare chambers 414 are disposed in all spaces between the first valve chamber 416 and the channels 412, and all spaces between the second valve chamber 418 and the channels 412.

The first valve chamber 416 of the first rotary valve 440 formed in the first housing 410 and the second valve chamber 418 of the second rotary valve 450 formed in the first housing 410 communicate with each other through a valve communication path 424 (an example of a channel). A spare chamber 414 is disposed between the valve communication path 424 and the first valve chamber 416, and between the valve communication path 424 and the second valve chamber 418.

### [Other embodiments]

In each of the present embodiments described above, each spare chamber is formed across a first housing and a second housing, but may be formed only in the first housing or may be formed only in the second housing.

In the fourth embodiment described above, the first valve chamber 416 of the first rotary valve 440 and the second valve chamber 318 of the second rotary valve 450 communicate with each other with the spare chambers 414 and the valve communication path 424. However, the valve communication path 424 may not be disposed, and the first valve chamber 416 and the second valve chamber 318 may communicate with each other only with the spare chambers 414. Furthermore, the spare chambers 414 may not be disposed, and the communication may be made only with the valve communication path 424.

The following configurations are conceivable from the above-described embodiments.

(1) One embodiment of a cooling module valve switches between a plurality of channels including an inflow channel and outflow channel of fluid flowing in a cooling module, the cooling module valve including a valve chamber into which the fluid flowing through the inflow channel flows and from which the fluid flowing through the outflow channel flows out, a valve body that is housed in the valve chamber and switches between the plurality of channels, and at least either at least one inflow spare chamber disposed between the valve chamber and the inflow channel and adjacent to the valve chamber, or at least one outflow spare chamber disposed between the valve chamber and the outflow channel and adjacent to the valve chamber.

According to the present embodiment, because at least either the inflow spare chamber disposed between the valve chamber and the inflow channel, and the outflow spare chamber disposed between the valve chamber and the outflow channel is provided, the fluid flows into the valve chamber via the inflow spare chamber and flows out from the valve chamber via the outflow spare chamber. Therefore, by appropriately designing sizes (heights) of the inflow spare chamber and the outflow spare chamber, disposition of the inflow channel and the outflow channel is not restricted by height of the cooling module valve. Thus, it is possible to provide a cooling module valve highly flexible in routing the inflow channel and the outflow channel.

(2) In another embodiment of the cooling module, in at least one of a plurality of the inflow spare chambers and of the outflow spare chambers, an outlet from the valve chamber to the outflow spare chamber and the outlet from the outflow spare chamber to the outflow channel, or an inlet from the inflow channel to the inflow spare chamber and the inlet from the inflow spare chamber to the valve chamber are different in height from each other in a rotation axis direction of the valve body.

According to the present embodiment, the disposition of the inflow channel and the outflow channel can be freely set by changing the height of the spare chamber.

(3) In another embodiment of the cooling module valve, the valve chamber includes an inlet communicating with the inflow spare chamber and an outlet communicating with the outflow spare chamber, and an axis of the inlet and an axis of the outlet are disposed on the same plane.

According to the present embodiment, heights of the inlet and outlet can be aligned, and thus the height of the cooling module valve can be lowered, and thus the cooling module can be downsized.

(4) In another embodiment of the cooling module valve, at least one of the inflow channel and the outflow channel is disposed so as not to overlap the inlet and the outlet in a lateral view.

According to the present embodiment, at least one of the inflow channel and the outflow channel is disposed so as not to overlap the inlet and the outlet in the lateral view, and thus, it is possible to configure the inflow channel and inlet and/or the outflow channel and the outlet to have heights different from each other, flexibility in routing the inflow channel and the outflow channel can be increased.

(5) In another embodiment of the cooling module valve, at least one of the inflow spare chamber and the outflow spare chamber is formed across a plurality of resin housings.

According to the present embodiment, flexibility in a shape (size, height) of the inflow spare chamber and/or the outflow spare chamber is increased, and flexibility in routing the inflow channel and the outflow channel can be increased.

(6) In another embodiment of the cooling module valve, at least one of the outflow channel communicates with another the channel in a cooling module, and the outflow channel is formed across a plurality of resin housings.

According to the present embodiment, by forming a communication channel across the plurality of resin housings, it is possible to enable communication even if another channel is formed in a single resin housing.

(7) In another embodiment of the cooling module valve, the valve body is entirely housed in the valve chamber.

According to the present embodiment, the valve body does not protrude from the valve chamber, and thus the cooling module valve can be downsized.

(8) In another embodiment of the cooling module valve, the valve body rotates about a rotation axis and is partitioned into a plurality of valve spaces in a circumferential direction by a coupling plate, and at least one of the valve spaces is further partitioned into a plurality of spaces in the rotation axis direction by a partition plate.

According to the present embodiment, two valves that are originally required can be integrated into one valve. Furthermore, because the partition plate is provided, a plurality of independent channels can be formed in the rotation axis direction. Furthermore, in a valve space without the partition plate, ports having different height positions can communicate with each other in the valve body, and thus the valve can be configured to be compact.

(9) In another embodiment of the cooling module valve, the valve chamber includes an inlet and an outlet of which axis height positions are different from each other in a direction along the rotation axis.

According to the present embodiment, the valve chamber has the inlet and the outlet of which axis height positions are different from each other in the direction along the rotation axis, and thus the valve can be configured to be compact.

(10) In another embodiment of the cooling module valve, the inflow spare chamber and the outflow spare chamber are disposed between the valve chamber and all the inflow channels, and between the valve chamber and all the outflow channels.

According to the present embodiment, because it is possible to configure the inflow channel and the inlet formed in the valve chamber and/or the outflow channel and the outlet formed in the valve chamber to have heights different from each other, flexibility in routing the inflow channel and the outflow channel can be increased.

(11) One embodiment of the cooling module includes a manifold formed by joining a plurality of resin housings, a cooling module valve that is housed in the manifold and switches between a plurality of channels, and a water pump that pumps fluid that flows through the channels, in which the cooling module valve includes a valve body, a valve chamber housing the valve body, and a spare chamber disposed between the valve chamber and the channels and adjacent to the valve chamber, of a plurality of the channels, the valve chamber, the spare chamber, and the water pump, at least a vortex chamber is formed in the resin housing, and the resin housing includes solely the channels, the valve chamber, the spare chamber, the vortex chamber, and a partition wall partitioning the channels, the valve chamber, the spare chamber, and the vortex chamber.

According to the present embodiment, it is possible to downsize the manifold while achieving functions and effects in (1).

(12) One embodiment of the cooling module includes a manifold formed by joining a plurality of resin housings, and a cooling module valve that is housed in the manifold and switches between a plurality of channels, in which the cooling module valve includes a valve chamber, and a spare chamber disposed between the valve chamber and the channels and adjacent to the valve chamber, a plurality of the channels, the valve chamber, and the spare chamber are formed in the resin housing, the valve chamber includes a first valve chamber and a second valve chamber, and the resin housing includes a valve communication path that allows the first valve chamber and the second valve chamber to communicate with each other.

According to the present embodiment, it is possible to allow the fluid to communicate between the first valve chamber and the second valve chamber via the valve communication path while achieving functions and effects in (1).

(13) One embodiment of the cooling module includes a manifold formed by joining a plurality of resin housings at a joining surface, and a cooling module valve that is housed in the manifold and switches between a plurality of channels, in which the cooling module valve includes a valve body that rotates about a rotation axis, and a valve chamber housing the valve body, a plurality of the channels and the valve chamber are formed in the resin housings, at least some of a plurality of the channels have a portion protruding outward from the resin housings, and a plurality of the channels having a portion protruding outward from the resin housings includes a first channel group that is a set of some of the channels, and a second channel group that is a set of a plurality of the channels not included in the first channel group and is disposed so as to be offset with respect to the first channel group in a direction along the rotation axis.

According to the present embodiment, the plurality of channels having different height positions are disposed, and thus the cooling module can be configured to be compact.

(14) In one embodiment of the cooling module, the valve body of the cooling module valve rotates about a rotation axis and is partitioned into a plurality of valve spaces in a circumferential direction by a coupling plate, and at least one of the valve spaces is further partitioned into a plurality of spaces in the rotation axis direction by a partition plate.

According to the present embodiment, two valves that are originally required can be integrated into one valve. Furthermore, because the partition plate is provided, a plurality of independent channels can be formed in the rotation axis direction. Furthermore, in a valve space without the partition plate, ports having different height positions can communicate with each other in the valve body, and thus the valve can be configured to be compact, and the cooling module can be downsized.

(15) In another embodiment of the cooling module, the valve chamber includes an inlet and an outlet of which axis height positions are different from each other in a direction along the rotation axis.

According to the present embodiment, the valve chamber has the inlet and the outlet of which axis height positions are different from each other in the direction along the rotation axis, and thus the valve can be configured to be compact, and the cooling module can be downsized.

(16) In one embodiment of the cooling module, the valve chamber is disposed at a central region of a pair of opposing outer walls in the resin housing.

According to the present embodiment, the valve chamber is disposed near the center of the resin housing, it is easy to adopt a configuration in which the channel or the spare chamber is adjacent to a periphery of the valve chamber, and thus dead space can be reduced in the resin housing, achieving downsizing. Furthermore, the channel can be configured to be relatively short as compared with an embodiment in which the valve chamber is disposed at an end portion of the resin housing.

(17) In one embodiment of the cooling module, the channels, the inflow spare chamber, and the spare chamber are radially arranged so as to surround the valve chamber.

According to the present embodiment, the channel and the spare chamber are disposed so as to surround the valve chamber, and thus dead space can be reduced in the resin housing, achieving downsizing.

### INDUSTRIAL APPLICABILITY

The present invention can be used for a cooling module valve and a cooling module.

### REFERENCE SIGNS LIST

4: First rotary valve (cooling module valve), 4A: First valve body (valve body), 4C: First valve chamber (valve chamber), 4D: First spare chamber (inflow spare chamber), 5: Second rotary valve (cooling module valve), 5A: Second valve body (valve body), 5C: Second valve chamber (valve chamber), 5D: Second spare chamber (inflow spare chamber, spare chamber), 5E: Third spare chamber (outflow spare chamber, spare chamber), 5F: Fourth spare chamber (outflow spare chamber, spare chamber), 6: Rotary valve (cooling module valve), 6A: Valve body, 6C: Valve chamber, 6D: First spare chamber (inflow spare chamber, spare chamber), 6E: Second spare chamber (inflow spare chamber, spare chamber), 6F: Third spare chamber (outflow spare chamber, spare chamber), 6G: Fourth spare chamber (outflow spare chamber, spare chamber), 10: Cooling module, 11c: Lateral first sub-channel (channel), 20: Cooling module, 21b: Upward second sub-channel (inflow channel, channel), 21c: Lateral second sub-channel (channel), 31b: Upward third sub-channel (inflow channel, channel) 31c: L-shaped third sub-channel (outflow channel, channel), 51: Communication channel (outflow channel, channel), 63c: Coupling plate, 63d: Partition plate, 63e: First valve space, (valve space), 63f: Second valve space (valve space), 63g: Third valve space (valve space), 64a: First communication hole (inlet), 64b: Second communication hole (inlet), 64c: Third communication hole (outlet), 64d: Fourth communication hole (outlet), 70: First housing (resin housing), 71: First inflow channel (inflow channel, channel), 72: First outflow channel (outflow channel, channel), 73: Second outflow channel (outflow channel, channel), 80: Second housing (resin housing), 81: Second inflow channel (inflow channel, channel), 82: Third inflow channel (inflow channel, channel), 110: First housing (resin housing), 120: Second housing (resin housing), 131: First communication hole (inlet), 134: Fourth communication hole (inlet), 135: Fifth communication hole (outlet), 137: Seventh communication hole (outlet), 300: Cooling module, 302: Manifold, 310: First housing (resin housing), 310a: Outer wall, 312: Channel (inflow channel, outflow channel), 312a: First channel group, 312b: Second channel group, 314: Spare chamber (inflow spare chamber, outflow spare chamber), 316: First valve chamber (valve chamber), 316a: First communication hole (inlet, outlet), 316b: Second communication hole (inlet, outlet), 318: Second valve chamber (valve chamber), 320: First vortex chamber (vortex chamber), 322: Second vortex chamber (vortex chamber), 324: First partition wall (partition wall), 330: Second housing (resin housing), 332: Second partition wall (partition wall), 340: First rotary valve (cooling module valve), 342: First valve body (valve body), 342a: Coupling plate, 342b: Partition plate, 342c: First valve space, (valve space), 342d: Second valve space (valve space), 342e: Third valve space (valve space), 350: Second rotary valve (cooling module valve), 352: Second valve body (valve body), 360: First water pump (water pump), 370: Second water pump (water pump), 400: Cooling module, 402: Manifold, 410: First housing (resin housing), 412: Channel (inflow channel, outflow channel), 414: Spare chamber (inflow spare chamber, outflow spare chamber), 416: First valve chamber (valve chamber), 418: Second valve chamber (valve chamber), 424: Valve communication path (channel), 430: Second housing (resin housing), 440: First rotary valve (cooling module valve), 450: Second rotary valve (cooling module valve), 460: First water pump (water pump), 470: Second water pump (water pump), AX: Rotation axis, and T: Rotation axis

## Claims

1. A cooling module valve that switches between a plurality of channels including an inflow channel and outflow channel of fluid flowing in a cooling module, the cooling module valve comprising:
a valve chamber into which the fluid flowing through the inflow channel flows and from which the fluid flowing through the outflow channel flows out,
a valve body that is housed in the valve chamber and switches between a plurality of the channels, and
at least either at least one inflow spare chamber disposed between the valve chamber and the inflow channel and adjacent to the valve chamber, or at least one outflow spare chamber disposed between the valve chamber and the outflow channel and adjacent to the valve chamber.

2. The cooling module valve according to claim 1, wherein, in at least one of a plurality of the inflow spare chambers and of the outflow spare chambers, an outlet from the valve chamber to the outflow spare chamber and the outlet from the outflow spare chamber to the outflow channel, or an inlet from the inflow channel to the inflow spare chamber and the inlet from the inflow spare chamber to the valve chamber are different in height from each other in a rotation axis direction of the valve body.

3. The cooling module valve according to claim 1, wherein
the valve chamber includes an inlet communicating with the inflow spare chamber and an outlet communicating with the outflow spare chamber, and
an axis of the inlet and an axis of the outlet are disposed on the same plane.

4. The cooling module valve according to claim 3, wherein at least one of the inflow channel and the outflow channel is disposed so as not to overlap the inlet and the outlet in a lateral view.

5. The cooling module valve according to any one of claims 1 to 4, wherein at least one of the inflow spare chamber and the outflow spare chamber is formed across a plurality of resin housings.

6. The cooling module valve according to claim 3, wherein at least one of the outflow channel communicates with another the channel in a cooling module, and the outflow channel is formed across a plurality of resin housings.

7. The cooling module valve according to any one of claims 1 to 6, wherein the valve body is entirely housed in the valve chamber.

8. The cooling module valve according to claim 7, wherein the valve body rotates about a rotation axis and is partitioned into a plurality of valve spaces in a circumferential direction by a coupling plate, and at least one of the valve spaces is further partitioned into a plurality of spaces in the rotation axis direction by a partition plate.

9. The cooling module valve according to claim 8, wherein the valve chamber includes an inlet and an outlet of which axis height positions are different from each other in a direction along the rotation axis.

10. The cooling module valve according to any one of claims 1 to 9, wherein the inflow spare chamber and the outflow spare chamber are disposed between the valve chamber and all the inflow channels, and between the valve chamber and all the outflow channels.

11. A cooling module comprising:
a manifold formed by joining a plurality of resin housings;
a cooling module valve that is housed in the manifold and switches between a plurality of channels; and
a water pump that pumps fluid that flows through the channels, wherein
the cooling module valve includes a valve body, a valve chamber housing the valve body, and a spare chamber disposed between the valve chamber and the channels and adjacent to the valve chamber,
of a plurality of the channels, the valve chamber, the spare chamber, and the water pump, at least a vortex chamber is formed in the resin housing, and
the resin housing includes solely the channels, the valve chamber, the spare chamber, the vortex chamber, and a partition wall partitioning the channels, the valve chamber, the spare chamber, and the vortex chamber.

12. A cooling module comprising:
a manifold formed by joining a plurality of resin housings; and
a cooling module valve that is housed in the manifold and switches between a plurality of channels, wherein
the cooling module valve includes a valve chamber, and a spare chamber disposed between the valve chamber and the channels and adjacent to the valve chamber,
a plurality of the channels, the valve chamber, and the spare chamber are formed in the resin housing,
the valve chamber includes a first valve chamber and a second valve chamber, and
the resin housing includes a valve communication path that allows the first valve chamber and the second valve chamber to communicate with each other.

13. A cooling module comprising:
a manifold formed by joining a plurality of resin housings at a joining surface; and
a cooling module valve that is housed in the manifold and switches between a plurality of channels, wherein
the cooling module valve includes a valve body that rotates about a rotation axis, and a valve chamber housing the valve body,
a plurality of the channels and the valve chamber are formed in the resin housings,
at least some of a plurality of the channels have a portion protruding outward from the resin housings, and
a plurality of the channels having a portion protruding outward from the resin housings includes a first channel group that is a set of some of the channels, and a second channel group that is a set of a plurality of the channels not included in the first channel group and is disposed so as to be offset with respect to the first channel group in a direction along the rotation axis.

14. The cooling module according to claim 13, wherein the valve body of the cooling module valve rotates about the rotation axis and is partitioned into a plurality of valve spaces in a circumferential direction by a coupling plate, and at least one of the valve spaces is further partitioned into a plurality of spaces in the rotation axis direction by a partition plate.

15. The cooling module according to claim 14, wherein the valve chamber includes an inlet and an outlet of which axis height positions are different from each other in a direction along the rotation axis.

16. The cooling module according to claim 11, wherein the valve chamber is disposed at a central region of a pair of opposing outer walls in the resin housing.

17. The cooling module according to claims 16, wherein the channels, the inflow spare chamber, and the outflow spare chamber are radially arranged so as to surround the valve chamber.
